# EUROPEAN PATENT SPECIFICATION

(11) **EP 4 487 645 B1**
(45) Date of publication and mention of the grant of the patent: **18.02.2026**
(21) Application number: 23721155.2
(22) Date of filing: 07.04.2023
(51) Int. Cl.: H04W 76/11, H04W 76/27, H04W 8/26, H04W 72/115, H04W 74/0833

(54) **MANAGING SMALL DATA TRANSMISSION CONFIGURATION PARAMETERS WHEN DETECTING A FAILURE**
VERWALTUNG KLEINER DATENÜBERTRAGUNGSKONFIGURATIONSPARAMETER BEI DER FEHLERERKENNUNG
GESTION DE PARAMÈTRES DE CONFIGURATION DE TRANSMISSION DE PETITES DONNÉES LORS DE LA DÉTECTION D'UNE DÉFAILLANCE

(30) Priority: 08.04.2022 US 202263329359 P
(43) Date of publication of application: 08.01.2025
(73) Proprietor: GOOGLE LLC, Mountain View CA 94043 (US)
(72) Inventor: WU, Chih-hsiang, Mountain View, CA 94043 (US)
(74) Representative: Marks & Clerk GST
(86) International application number: PCT/US2023/017944
(87) International publication number: WO 2023/196633

(56) References cited:
- EP-A1- 3 979 752
- US-A1- 2022 078 697
- US-A1- 2022 095 409
- HUAWEI ET AL: "Running MAC CR for Small Data", vol. RAN WG2, no. Electronic; 20220221 - 20220303, 28 January 2022 (2022-01-28), XP052122651, Retrieved from the Internet <URL:https://ftp.3gpp.org/tsg_ran/WG2_RL2/TSGR2_116bis-e/Inbox/R2-2202041.zip R2-2202041 SDT_draftRunningCR38321-g40-Post116bis_v00_Rapp.docx> [retrieved on 20220128]
- ZTE CORPORATION ET AL: "Open issues for RACH based SDT", vol. RAN WG2, no. eMeeting; 20210412 - 20210420, 1 April 2021 (2021-04-01), XP051992003, Retrieved from the Internet <URL:https://ftp.3gpp.org/tsg_ran/WG2_RL2/TSGR2_113bis-e/Docs/R2-2103020.zip R2-2103020_RACH based SDT_v1.docx> [retrieved on 20210401]

## Description

### CROSS-REFERENCE TO RELATED APPLICATIONS

### FIELD OF THE DISCLOSURE

This disclosure relates generally to wireless communications and, more particularly, to managing configurations of small data communication of uplink and/or downlink data at a user equipment (UE) and a radio access network (RAN) when the UE operates in an inactive or idle state associated with a protocol for controlling radio resources.

### BACKGROUND

This background description is provided for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Generally speaking, a base station operating a cellular radio access network (RAN) communicates with a user equipment (UE) using a certain radio access technology (RAT) and multiple layers of a protocol stack. For example, the physical layer (PHY) of a RAT provides transport channels to the Medium Access Control (MAC) sublayer, which in turn provides logical channels to the Radio Link Control (RLC) sublayer, and the RLC sublayer in turn provides data transfer services to the Packet Data Convergence Protocol (PDCP) sublayer. The Radio Resource Control (RRC) sublayer is disposed above the PDCP sublayer.

The RRC sublayer specifies the RRC_IDLE state, in which a UE does not have an active radio connection with a base station; the RRC_CONNECTED state, in which the UE has an active radio connection with the base station; and the RRC_INACTIVE to allow a UE to more quickly transition back to the RRC_CONNECTED state due to Radio Access Network (RAN)-level base station coordination and RAN-paging procedures. In some cases, the UE in the RRC _INACTIVE state has only one, relatively small packet to transmit. A Small Data Transmission (SDT) procedure to enable the 5G NR supports data transmission for the UE operating in the RRC _INACTIVE state (i.e., without transitioning to RRC_CONNECTED state).

Devices enable SDT for particular radio bearers. A UE initiates SDT when less than a configured amount of uplink data awaits transmission across all radio bearers for which SDT is enabled, the downlink reference signal received power (RSRP) is above a configured threshold, and a valid SDT resource is available. Further, the UE initiates the SDT procedure with either a transmission over a random access channel (RACH), as part of a random access SDT (RA-SDT) session, or over Type 1 configured grant (CG) resources, as part of a CG-SDT session. For RA-SDT, the network configures 2-step and/or 4-step random access resources for an SDT transmission. In an RA-SDT session, the UE performs an initial transmission including data in message 3 (MSG3) of a 4-step random access procedure, or in message A (MSGA) of a 2-step random access procedure. The network then schedules subsequent uplink and/or downlink transmissions using uplink grants and downlink assignments, respectively, after the completion of the random access procedure.

A UE initiates a CG-SDT session with valid uplink (UL) timing alignment. The UE maintains the UL timing alignment using a network-configured SDT-specific timing alignment timer and a downlink (DL) RSRP of a configured number of the highest ranked synchronization signal blocks (SSBs). Upon expiration of the SDT-specific timing alignment timer, the UE releases the CG resources. After initiating CG-SDT, the UE performs an initial transmission including data, during a CG occasion using a CG, and the network schedules subsequent uplink transmissions using dynamic grants. Alternatively, the uplink transmissions takes place during the subsequent CG resource occasions. During CG-SDT, a base station schedules downlink transmissions using dynamic assignments. The UE initiates subsequent uplink transmission after reception of confirmation for the initial transmission from the network.

The UE receives SDT configuration parameters from a radio access network (RAN) node while the UE operates in the RRC _INACTIVE state or RRC_CONNECTE state. The UE in the RRC _INACTIVE state may perform SDT (e.g., CG-SDT or RA-SDT) with the RAN to transmit SDT data in accordance with the SDT configuration parameters. However, it is not clear how the UE and RAN handle the SDT configuration parameters. US 2022/095409 A1 discloses a communication method and a system for converging a 5th-Generation (5G) communication system with a technology for Internet of Things (IoT) including a method and an apparatus for small data transmission.

### SUMMARY

The invention is defined by the appended claims.

A UE communicating with a RAN node monitors a downlink control channel during a random access small data transmission (RA-SDT) session according to a first method according to claim 1. In particular, the UE receives, at the UE and from the RAN node, a random access procedure message including a temporary identifier for the UE. The UE then monitors, at the UE and during the RA-SDT session, the downlink control channel using the temporary identifier. The first RAN node then receives, at the UE and from the RAN node, an indication to end the RA-SDT session. The UE then stops, responsive to the receiving of the indication, the monitoring of the downlink control channel using the temporary identifier.

Then, responsive to the receiving of the indication, the UE retains the temporary identifier.

Similarly, the UE monitors a downlink control channel during a configured grant small data transmission (CG-SDT) session according to a second method according to claim 6. In particular, the UE receives, at the UE and from the RAN node, a first indication to configure a CG-SDT session and causing the UE to store a temporary identifier for the UE. The UE then monitors, at the UE and during the CG-SDT session, the downlink control channel using the temporary identifier. The UE then receives, at the UE and from the RAN node, a second indication to end the CG-SDT session. The UE then stops, responsive to the receiving of the second indication, the monitoring of the downlink control channel.

Then responsive to the receiving of the second indication, the UE retains the temporary network identifier.

Independent clam 11 defines a UE apparatus.

### BRIEF DESCRIPTION OF THE DRAWINGS

Fig. 1A is a block diagram of an example wireless communication system in which a user device and a base station of this disclosure can implement the techniques of this disclosure for managing small data transmission;
Fig. 1B is a block diagram of an example base station in which a centralized unit (CU) and a distributed unit (DU) can operate in the system of Fig. 1A;
Fig. 2A is a block diagram of an example protocol stack according to which the UE of Fig. 1A communicates with base stations;
Fig. 2B is a block diagram of an example protocol stack according to which the UE of Fig. 1A communicates with a CU and a DU;
Fig. 3 illustrates an example scenario in which a UE communicates with a DU of a RAN using a non-SDT configuration before the UE receives an SDT configuration from the DU and transitions to an inactive state;
Fig. 4 illustrates an example scenario in which a UE communicates with a DU of a RAN while in an inactive state before the UE receives an SDT configuration from the DU and remains in the inactive state;
Fig. 5A illustrates an example scenario in which a UE transitions from an inactive state to a connected state before the UE receives an SDT configuration from the DU and transitions back to the inactive state;
Fig. 5B illustrates a scenario similar to that of Fig. 5A, but in which the UE does not initially communicate small data with the DU while in the initial inactive state;
Fig. 6A illustrates an example scenario in which a UE receives an SDT configuration with an RRC release command from a DU;
Fig. 6B illustrates an example scenario in which a UE initiates uplink SDT and continues to communicate uplink and/or downlink data via a DU, in an inactive state;
Fig. 6C illustrates an example scenario in which a UE receives an SDT configuration in a connected state and communicates small data in the inactive state according to the received SDT configuration;
Fig. 7A illustrates an example scenario in which a first base station hands over a UE to a second base station and the UE receives an SDT configuration from the second base station;
Fig. 7B illustrates an example scenario similar to Fig. 7A, except that the first base station prepares the handover with the second base station via the CN ;
Fig. 8 illustrates an example scenario for managing SDT configuration in an RRC reestablishment scenario;
Fig. 9 illustrates an example scenario similar to that of Fig. 8, except that the CU releases the UE context rather than keeping the UE context;
Fig. 10A illustrates a flow diagram of an example method implemented in a UE for communicating with a RAN using SDT and non-SDT configuration parameters, performing a reestablishment procedure with the RAN, and retaining the SDT configuration parameters;
Fig. 10B illustrates a flow diagram of an example method similar to Fig. 10A, but in which the UE releases the SDT configuration parameters;
Fig. 10C illustrates a flow diagram of an example method similar to Fig. 10A, but in which the UE retains a first portion of the SDT configuration parameter and releases a second portion of the SDT configuration parameters;
Fig. 10D illustrates a flow diagram of an example method similar to Fig. 10A, but in which the UE determines whether to retain or release the SDT configuration parameters based on whether the UE performs the reestablishment procedure on a first or second PCell;
Fig. 10E illustrates a flow diagram of an example method similar to Fig. 10D, but in which the UE retains a portion of the SDT configuration parameters when performing the procedure on the second PCell;
Fig. 10F illustrates a flow diagram of an example method similar to Fig. 10D, but in which the UE retains a portion of the SDT configuration parameters when performing the procedure on the first PCell;
Fig. 11A illustrates a flow diagram of an example method implemented in a UE for determining whether to release or retain SDT configuration parameters based on whether a message from the RAN includes a full configuration indication; and
Fig. 11B illustrates a flow diagram of an example method similar to Fig. 11A, but in which the UE releases non-SDT configuration parameters when the message includes a full configuration indication.

### DETAILED DESCRIPTION OF THE DRAWINGS

As discussed in more detail below, a user equipment (UE) and/or a network node of a radio access network (RAN) can use the techniques of this disclosure for managing early data communication and transitioning a UE between states of a protocol for controlling radio resources between the UE and the RAN. As used in this disclosure, early data communication can refer to early data transmission (EDT) from the perspective of the network (i.e., EDT in the downlink direction), or EDT from the perspective of the UE (i.e., EDT in the uplink direction).

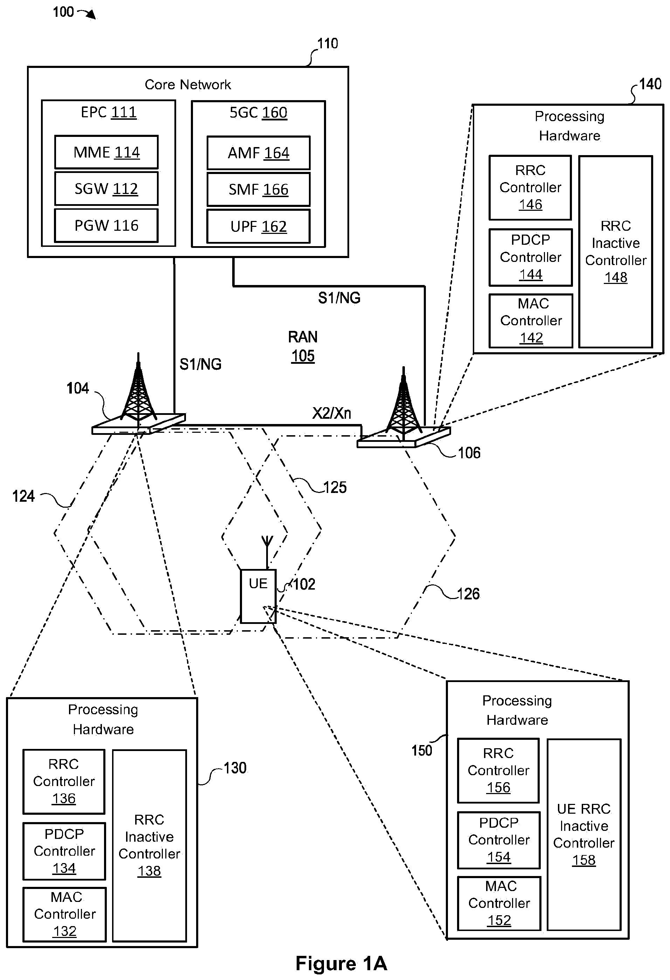

Referring first to Fig. 1A, an example wireless communication system 100 includes a UE 102, a base station (BS) 104, a base station 106, and a core network (CN) 110. The base stations 104 and 106 can operate in a RAN 105 connected to the core network (CN) 110. The CN 110 can be implemented as an evolved packet core (EPC) 111 or a fifth generation (5G) core (5GC) 160, for example. The CN 110 can also be implemented as a sixth generation (6G) core in another example.

The base station 104 covers a cell 124, and the base station 106 covers a cell 126. If the base station 104 is a gNB, the cell 124 is an NR cell. If the base station 104 is an ng-eNB, the cell 124 is an evolved universal terrestrial radio access (E-UTRA) cell. Similarly, if the base station 106 is a gNB, the cell 126 is an NR cell, and if the base station 106 is an ng-eNB, the cell 126 is an E-UTRA cell. The cells 124 and 126 can be in the same Radio Access Network Notification Areas (RNA) or different RNAs. In general, the RAN 105 can include any number of base stations, and each of the base stations can cover one, two, three, or any other suitable number of cells. The UE 102 can support at least a 5G NR (or simply, "NR") or E-UTRA air interface to communicate with the base stations 104 and 106. Each of the base stations 104, 106 can connect to the CN 110 via an interface (e.g., S1 or NG interface). The base stations 104 and 106 also can be interconnected via an interface (e.g., X2 or Xn interface) for interconnecting NG RAN nodes.

Among other components, the EPC 111 can include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE to one or more external packet data networks, e.g., an Internet network and/or an Internet Protocol (IP) Multimedia Subsystem (IMS) network. The 5GC 160 includes a User Plane Function (UPF) 162 and an Access and Mobility Management Function (AMF) 164, and/or Session Management Function (SMF) 166. Generally speaking, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

As illustrated in Fig. 1A, the base station 104 supports a cell 124, and the base station 106 supports a cell 126. The cells 124 and 126 can partially overlap, so that the UE 102 can select, reselect, or hand over from one of the cells 124 and 126 to the other. To directly exchange messages or information, the base station 104 and base station 106 can support an X2 or Xn interface. In general, the CN 110 can connect to any suitable number of base stations supporting NR cells and/or EUTRA cells.

As discussed in detail below, the UE 102 and/or the RAN 105 utilize the techniques of this disclosure when the radio connection between the UE 102 and the RAN 105 is suspended, e.g., when the UE 102 operates in an inactive or idle state of the protocol for controlling radio resources between the UE 102 and the RAN 105. For clarity, the examples below refer to the RRC _INACTIVE or RRC_IDLE state of the RRC protocol.

As used in this disclosure, the terms "data" or "data packet" refer to signaling, control-plane information at a protocol layer of controlling radio resources (e.g., RRC); controlling mobility management (MM); controlling session management (SM); or non-signaling, non-control-plane information at protocol layers above the layer of the protocol for controlling radio resources (e.g., RRC), above the layer of the protocol for controlling mobility management (MM), above the layer of the protocol for controlling session management (SM), or above the layer of the protocol for controlling quality of service (QoS) flows (e.g., service data adaptation protocol (SDAP)). Some non-signaling, non-control-plane information may be called user-plane data. The data to which the UE 102 and/or the RAN 105 applies the techniques of this disclosure can include, for example, Internet of Things (IoT) data, ethernet traffic data, internet traffic data, or a short message service (SMS) message. Further, as discussed below, the UE 102 in some implementations applies these techniques only if the size of the data is below a certain threshold value.

In the example scenarios discussed below, the UE 102 transitions to the RRC _INACTIVE or RRC_IDLE state, selects a cell of the base station 104, and exchanges data with the base station 104, either via the base station 106 or with the base station 104 directly, without transitioning to an RRC_CONNECTED state. As a more specific example, after the UE 102 determines that data is available for uplink transmission in the RRC _INACTIVE or RRC _IDLE state, the UE 102 can apply one or more security functions to an uplink (UL) data packet, generate a first UL protocol data unit (PDU) including the security-protected packet, include a UL RRC message along with the first UL PDU in a second UL PDU, and transmit the second UL PDU to the RAN 105. The UE 102 includes a UE identity/identifier (ID) for the UE 102 in the UL RRC message. The RAN 105 can identify the UE 102 based on the UE ID. In some implementations, the UE ID is an inactive Radio Network Temporary Identifier (I-RNTI), a resume ID, or a non-access stratum (NAS) ID. The NAS ID can be an S-Temporary Mobile Subscriber Identity (S-TMSI) or a Global Unique Temporary Identifier (GUTI).

The security function can include an integrity protection and/or encryption function. When integrity protection is enabled, the UE 102 generates a message authentication code for integrity (MAC-I) to protect integrity of the data. Thus, the UE 102 in this case generates a security-protected packet including the data and the MAC-I. When encryption is enabled, the UE 102 encrypts the data to obtain an encrypted packet, so that the security-protected packet includes encrypted data. When both integrity protection and encryption are enabled, the UE 102 generates a MAC-I for protecting integrity of the data and encrypts the data along with the MAC-I to generate an encrypted packet and an encrypted MAC-I. The UE 102 then transmits the security-protected packet to the RAN 105 while in the RRC_INACTIVE or RRC_IDLE state.

In some implementations, the data is an uplink (UL) service data unit (SDU) of the packet data convergence protocol (PDCP) or SDAP. The UE 102 applies the security function to the SDU and includes the secured SDU in a first UL PDU (e.g., a UL PDCP PDU). The UE 102 then includes the UL PDCP PDU in a second UL PDU such as a UL MAC PDU, which, depending on the implementation, is associated with the medium access control (MAC) layer. Thus, the UE 102 in such cases transmits the secured UL PDCP PDU in the UL MAC PDU. In some implementations, the UE 102 includes, in the UL MAC PDU, a UL RRC message. In further implementations, the UE 102 does not include a UL RRC message in the UL MAC PDU. In some such cases, the UE 102 does not include a UE ID of the UE 102 in the UL MAC PDU not including a UL RRC message. In yet further implementations, the UE 102 includes the UL PDCP PDU in a UL radio link control (RLC) PDU and then includes the UL RLC PDU in the UL MAC PDU. In some implementations where the UE 102 includes the UL RRC message in the UL MAC PDU, the UE 102 generates an RRC MAC-I and includes the RRC MAC-I in the UL RRC message. For example, the RRC MAC-I is a *resumeMAC-I* field (e.g., as specified in 3GPP specification 38.331). In further implementations, the UE obtains the RRC MAC-I from the UL RRC message with an integrity key (e.g., K_{RRCint} key), an integrity protection algorithm, and/or other parameters COUNT (e.g., 32-bit, 64-bit or 128-bit value), BEARER (e.g., 5-bit value), and DIRECTION (e.g., 1-bit value). In some implementations, the UE sets bits for COUNT, BEARER, and DIRECTION to binary ones to generate the RRC MAC-I.

In further implementations, the data is a UL service data unit (SDU) of the NAS. The UE 102 applies the security function to the SDU and includes the secured SDU in a first UL PDU such as a NAS PDU, which can be associated with the NAS layer. For example, depending on the implementation, the NAS layer is an MM sublayer or SM sublayer of 5G, Evolved Packet System (EPS), or 6G. Then, in some implementations, the UE 102 includes the UL NAS PDU in a second UL PDU such as a UL RRC message. Thus, the UE 102 in such cases transmits the (first) secured UL NAS PDU in the UL RRC message. In some implementations, the UE 102 includes the UL RRC message in a UL MAC PDU and transmits the UL MAC PDU to a base station (e.g., base station 104 or 106) via a cell (e.g., cell 124 or 126). In this case, the UE 102 does not include an RRC MAC-I in the UL RRC message. Alternatively, the UE 102 includes an RRC MAC-I as described above.

In some implementations, the UL RRC message described above is a common control channel (CCCH) message, an RRC resume request message, or an RRC early data request message. In further implementations, the UL RRC message includes a UE ID of the UE 102 as described above.

More generally, the UE 102 can secure the data using at least one of encryption and integrity protection, include the secured data as a security-protected packet in the first UL PDU, and transmit the first UL PDU to the RAN 105 in the second UL PDU.

In some scenarios and implementations, the base station 106 retrieves the UE ID of the UE 102 from the UL RRC message and identifies the base station 104 as the destination of the data in the first UL PDU, based on the determined UE ID. In one example implementation, the base station 106 retrieves the first UL PDU from the second UL PDU and transmits the first UL PDU to the base station 104. The base station 104 then retrieves the security-protected packet from the first UL PDU, applies a number of security functions to decrypt the data and/or check the integrity protection, and transmits the data to the CN 110 (e.g., SGW 112, UPF 162, MME 114 or AMF 164) or an edge server. In some implementations, the edge server operates within the RAN 105. More specifically, the base station 104 derives at least one security key from UE context information of the UE 102. Then the base station 104 retrieves the data from the security-protected packet by using the at least one security key and transmits the data to the CN 110 or edge server.

When the security-protected packet is an encrypted packet, the base station 104 decrypts the encrypted packet to obtain the data by using the at least one security key (e.g., an encryption and/or decryption key). In some implementations, if the security-protected packet is an integrity-protected packet, the integrity-protected packet includes the data and the MAC-I. The base station 104 can verify whether the MAC-I is valid for the security-protected packet by using the at least one security key (e.g., an integrity key). When the base station 104 confirms that the MAC-I is valid, the base station 104 sends the data to the CN 110 or edge server. However, when the base station 104 determines that the MAC-I is invalid, the base station 104 discards the security-protected packet. In further implementations, if the security-protected packet is both encrypted and integrity-protected, the encrypted and integrity-protected packet includes the encrypted packet along with the encrypted MAC-I. The base station 104 in this case decrypts the encrypted packet and the encrypted MAC-I to obtain the data and the MAC-I. The base station 104 then determines whether the MAC-I is valid for the data. If the base station 104 determines that the MAC-I is valid, the base station 104 retrieves the data and forwards the data to the CN 110 or edge server. However, if the base station 104 determines that the MAC-I is invalid, the base station 104 discards the packet.

In further implementations, the base station 106 retrieves the security-protected packet from the first UL PDU. The base station 106 performs a retrieve UE context procedure with the base station 104 to obtain UE context information of the UE 102 from the base station 104. The base station 106 derives at least one security key from the UE context information. Then the base station 106 retrieves the data from the security-protected packet by using the at least one security key and transmits the data to the CN 110 (e.g., UPF 162) or an edge server. When the security-protected packet is an encrypted packet, the base station 106 decrypts the encrypted packet to obtain the data by using the at least one security key (e.g., an encryption and/or decryption key).

In some implementations, if the security-protected packet is an integrity-protected packet, the integrity protected packet includes the data and the MAC-I. The base station 106 can verify whether the MAC-I is valid for the security-protected packet by using the at least one security key (e.g., an integrity key). When the base station 106 confirms that the MAC-I is valid, the base station 106 sends the data to the CN 110. On the other hand, when the base station 106 determines that the MAC-I is invalid, the base station 106 discards the security-protected packet. Further, in implementations where the security-protected packet is both encrypted and integrity-protected, the encrypted and integrity-protected packet include the encrypted packet along with the encrypted MAC-I. The base station 106 in this case decrypts the encrypted packet and the encrypted MAC-I to obtain the data and the MAC-I. The base station 106 then determines whether the MAC-I is valid for the data. If the base station 106 determines that the MAC-I is valid, the base station 106 retrieves the data and forwards the data to the CN 110. However, if the base station 106 determines that the MAC-I is invalid, the base station 106 discards the packet.

In other scenarios and implementations, the base station 104 retrieves the UE ID of the UE 102 from the UL RRC message and identifies that the base station 104 stores UE context information of the UE 102. Thus, the base station 104 retrieves the security-protected packet from the first UL PDU, retrieves the data from the security-protected packet, and sends the data to the CN 110 or edge server as described above.

Further, the RAN 105 in some cases transmits data in the downlink (DL) direction to the UE 102 operating in the RRC_INACTIVE or RRC_IDLE state.

For example, when the base station 104 determines that data is available for downlink transmission to the UE 102 currently operating in the RRC _INACTIVE or RRC_IDLE state, the base station 104 applies at least one security function to the data to generate a security-protected packet, a first DL PDU including the security-protected packet, and the first DL PDU in a second DL PDU. Depending on the implementation, to secure the data, the base station 104 applies the security function (e.g., integrity protection and/or encryption) to the data. More particularly, when integrity protection is enabled, the base station 104 generates a MAC-I for protecting integrity of the data, so that the security-protected packet includes the data and the MAC-I. When encryption is enabled, the base station 104 encrypts the data to generate an encrypted packet, so that the security-protected packet is an encrypted packet. Further, in implementations where both integrity protection and encryption are enabled, the base station 104 generates a MAC-I for protecting the integrity of the data and encrypts the data along with the MAC-I to generate an encrypted packet and an encrypted MAC-I. The base station 104, in some implementations, generates a first DL PDU, such as a DL PDCP PDU, using the security-protected packet; includes the first DL PDU in a second DL PDU associated with the MAC layer, for example (e.g., a DL MAC PDU); and transmits the second DL PDU to the UE 102 without first causing the UE 102 to transition from the RRC _INACTIVE or RRC_IDLE state to the RRC_CONNECTED state. In some implementations, the base station 104 includes the DL PDCP PDU in a DL RLC PDU, includes the DL RLC PDU in the DL MAC PDU, and transmits the DL MAC PDU to the UE 102 without first causing the UE 102 to transition from the RRC _INACTIVE or RRC_IDLE state to the RRC_CONNECTED state.

In further implementations, the base station 104 transmits the first DL PDU to the base station 106, which then generates a second PDU (e.g., a DL MAC PDU) including the first DL PDU and transmits the second DL PDU to the UE 102 without first causing the UE 102 to transition from the RRC _INACTIVE or RRC_IDLE state to the RRC_CONNECTED state. In some implementations, the base station 106 generates a DL RLC PDU including the first DL PDU and includes the DL RLC PDU in the second DL PDU. In yet further implementations, the base station 104 includes the first DL PDU in a DL RLC PDU and transmits the DL RLC PDU to the base station 106, which then generates a second DL PDU (e.g., a DL MAC PDU), including the DL RLC PDU, and transmits the second DL PDU to the UE 102.

In some implementations, the base station (i.e., the base station 104 or 106) generates a downlink control information (DCI) and a cyclic redundancy check (CRC) scrambled with an ID of the UE 102 to transmit the second DL PDU that the base station generates. In some implementations, the ID of the UE 102 can be a Radio Network Temporary Identifier (RNTI). For example, depending on the implementation, the RNTI is a cell RNTI (C-RNTI), a temporary C-RNTI, or an inactive C-RNTI. The base station transmits the DCI and scrambled CRC on a physical downlink control channel (PDCCH) to the UE 102 operating in the RRC _INACTIVE or RRC_IDLE state. The base station scrambles the CRC with the ID of the UE 102. In some implementations, the base station assigns the ID of the UE 102 to the UE 102 in a random access response or a message B (MsgB) that the base station transmits in a random access procedure with the UE 102 before transmitting the DCI and scrambled CRC. In further implementations, the base station assigns the ID of the UE 102 to the UE 102 in an RRC message (e.g., RRC release message or an RRC reconfiguration message) that the base station transmits to the UE 102 before transmitting the DCI and scrambled CRC, such as while the UE 102 was in the RRC_CONNECTED state.

In some implementations, the UE 102 operating in the RRC _INACTIVE or RRC_IDLE state receives the DCI and scrambled CRC on the PDCCH. Then the UE 102 confirms that a physical downlink shared channel (PDSCH), including the second DL PDU, is addressed to the UE 102 according to the ID of the UE 102, DCI, and scrambled CRC. The UE 102 then can retrieve the data from the security-protected packet. If the security-protected packet is an encrypted packet, the UE 102 can decrypt the encrypted packet using the appropriate decryption function and the security key to obtain the data. If the security-protected packet is the integrity-protected packet including the data and the MAC-I, the UE 102 can determine whether the MAC-I is valid. If the UE 102 confirms that the MAC-I is valid, the UE 102 retrieves the data. If, however, the UE 102 determines that the MAC-I is invalid, the UE 102 discards the packet. Further, in implementations where the security-protected packet is both encrypted and integrity-protected, with encrypted data and an encrypted MAC-I, the UE 102 decrypts the encrypted packet and encrypted MAC-I to obtain the data and the MAC-I. The UE 102 can then verify that the MAC-I is valid for the data. If the UE 102 confirms that the MAC-I is valid, the UE 102 retrieves and processes the data. Otherwise, when the UE 102 determines that the MAC-I is invalid, the UE 102 discards the data.

The base station 104 is equipped with processing hardware 130 that can include one or more general-purpose processors (e.g., CPUs) and a non-transitory computer-readable memory storing instructions that the one or more general-purpose processors execute. Additionally or alternatively, the processing hardware 130 can include special-purpose processing units. The processing hardware 130 in an example implementation includes a Medium Access Control (MAC) controller 132 configured to perform a random access procedure with one or more user devices, receive uplink MAC protocol data units (PDUs) to one or more user devices, and transmit downlink MAC PDUs to one or more user devices. The processing hardware 130 can also include a Packet Data Convergence Protocol (PDCP) controller 134 configured to transmit DL PDCP PDUs in accordance with which the base station 104 can transmit data in the downlink direction, in some scenarios, and receive UL PDCP PDUs in accordance with which the base station 104 can receive data in the uplink direction, in other scenarios. The processing hardware further can include an RRC controller 136 to implement procedures and messaging at the RRC sublayer of the protocol communication stack. The processing hardware 130 in an example implementation includes an RRC inactive controller 138 configured to manage uplink and/or downlink communications with one or more UEs operating in the RRC _INACTIVE or RRC _IDLE state. The base station 106 can include generally similar components. In particular, components 140, 142, 144, 146, and 148 of the base station 106 can be similar to the components 130, 132, 134, 136, and 138, respectively.

The UE 102 is equipped with processing hardware 150 that can include one or more general-purpose processors such as CPUs and non-transitory computer-readable memory storing machine-readable instructions executable on the one or more general-purpose processors, and/or special-purpose processing units. The processing hardware 150 in an example implementation includes an RRC inactive controller 158 configured to manage uplink and/or downlink communications when the UE 102 operates in the RRC_INACTIVE state. The processing hardware 150 in an example implementation includes a Medium Access Control (MAC) controller 152 configured to perform a random access procedure with a base station, transmit uplink MAC protocol data units (PDUs) to the base station, and receive downlink MAC PDUs from the base station. The processing hardware 150 can also include a PDCP controller 154 configured to, in some scenarios, transmit DL PDCP PDUs in accordance with which the base station 106 can transmit data in the downlink direction, and, in further scenarios, receive UL PDCP PDUs in accordance with which the base station 106 can receive data in the uplink direction. The processing hardware further can include an RRC controller 156 to implement procedures and messaging at the RRC sublayer of the protocol communication stack.

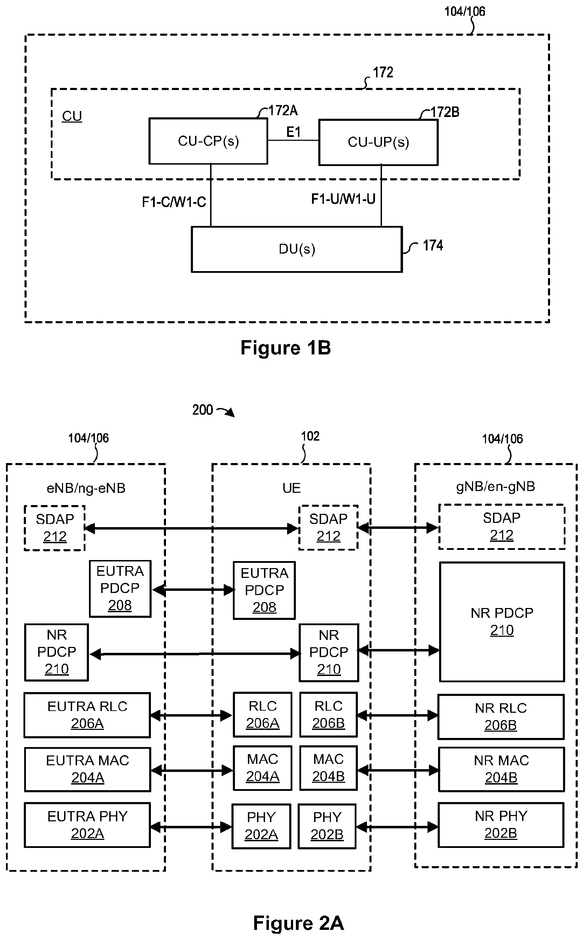

Fig. 1B depicts an example distributed or disaggregated implementation of any one or more of the base stations 104, 106. In this implementation, the base stations 104, 106 include a central unit (CU) 172 and one or more distributed units (DUs) 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 can include a PDCP controller, an RRC controller and/or an RRC inactive controller such as PDCP controller 134, 144, RRC controller 136, 146 and/or RRC inactive controller 138, 148. In some implementations, the CU 172 includes a radio link control (RLC) controller configured to manage or control one or more RLC operations or procedures. In further implementations, the CU 172 does not include an RLC controller.

Each of the DUs 174 also includes processing hardware that can include one or more general-purpose processors (e.g., CPUs) and computer-readable memory storing machine-readable instructions executable on the one or more general-purpose processors, and/or special-purpose processing units. For example, the processing hardware can include a MAC controller (e.g., MAC controller 132, 142) configured to manage or control one or more MAC operations or procedures (e.g., a random access procedure), and/or an RLC controller configured to manage or control one or more RLC operations or procedures. The process hardware can also include a physical layer controller configured to manage or control one or more physical layer operations or procedures.

In some embodiments, the RAN 105 supports Integrated Access and Backhaul (IAB) functionality. In some implementations, the DU 174 operates as an (IAB)-node, and the CU 172 operates as an IAB-donor.

In some implementations, the CU 172 includes a logical node CU-CP 172A that hosts the control plane part of the PDCP protocol of the CU 172. In further implementations, the CU 172 includes a logical node CU-UP 172B that hosts the user plane part of the PDCP protocol and/or Service Data Adaptation Protocol (SDAP) protocol of the CU 172. Depending on the implementation, the CU-CP 172A transmits control information (e.g., RRC messages, F1 application protocol messages), and the CU-UP 172B transmits the data packets (e.g., SDAP PDUs or Internet Protocol packets).

The CU-CP 172A can connect to multiple CU-UP 172B through the E1 interface. The CU-CP 172A selects the appropriate CU-UP 172B for the requested services for the UE 102. In some implementations, a single CU-UP 172B connects to multiple CU-CP 172A through the E1 interface. The CU-CP 172A can connect to one or more DU 174s through an F1-C interface. The CU-UP 172B can connect to one or more DU 174 through the F1-U interface under the control of the same CU-CP 172A. In some implementations, one DU 174 connects to multiple CU-UP 172B under the control of the same CU-CP 172A. In such implementations, the CU-CP 172A establishes the connectivity between a CU-UP 172B and a DU 174 by using Bearer Context Management functions.

Fig. 2A illustrates, in a simplified manner, an example protocol stack 200 according to which the UE 102 can communicate with an eNB/ng-eNB or a gNB (e.g., one or more of the base stations 104, 106).

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to an EUTRA PDCP sublayer 208 and, in some cases, to an NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. In some implementations, the NR PDCP sublayer 210 then provides data transfer services to Service Data Adaptation Protocol (SDAP) 212 or a radio resource control (RRC) sublayer (not shown in Fig. 2A). The UE 102, in some implementations, supports both the EUTRA and the NR stack as shown in Fig. 2A, to support handover between EUTRA and NR base stations and/or to support DC over EUTRA and NR interfaces. Further, as illustrated in Fig. 2A, the UE 102 can support layering of NR PDCP 210 over EUTRA RLC 206A, and SDAP sublayer 212 over the NR PDCP sublayer 210.

The EUTRA PDCP sublayer 208 and the NR PDCP sublayer 210 receive packets (e.g., from an Internet Protocol (IP) layer, layered directly or indirectly over the PDCP layer 208 or 210) that can be referred to as service data units (SDUs), and output packets (e.g., to the RLC layer 206A or 206B) that can be referred to as protocol data units (PDUs). Except where the difference between SDUs and PDUs is relevant, this disclosure for simplicity refers to both SDUs and PDUs as "packets."

In some implementations, on a control plane, the EUTRA PDCP sublayer 208 and the NR PDCP sublayer 210 provides signaling radio bearers (SRBs) or RRC sublayer (not shown in Fig. 2A) to exchange RRC messages or non-access-stratum (NAS) messages, for example. In further implementations, on a user plane, the EUTRA PDCP sublayer 208 and the NR PDCP sublayer 210 provides Data Radio Bearers (DRBs) to support data exchange. Data exchanged on the NR PDCP sublayer 210 can be SDAP PDUs, Internet Protocol (IP) packets, or Ethernet packets.

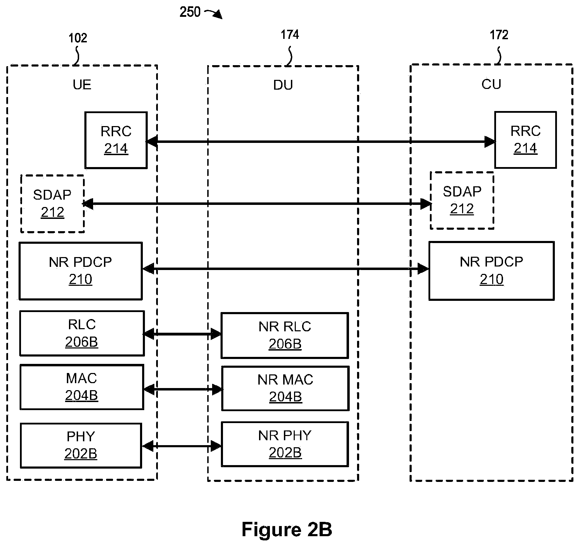

Fig. 2B illustrates, in a simplified manner, an example protocol stack 250, via which the UE 102 can communicate with a DU (e.g., DU 174) and a CU (e.g., CU 172). The radio protocol stack 200 is functionally split as shown by the radio protocol stack 250 in Fig. 2B. The CU at any of the base stations 104 or 106 can hold all the control and upper layer functionalities (e.g., RRC 214, SDAP 212, NR PDCP 210), while the lower layer operations (e.g., NR RLC 206B, NR MAC 204B, and NR PHY 202B) are delegated to the DU. To support connection to a 5GC, NR PDCP 210 provides SRBs to RRC 214, and NR PDCP 210 provides DRBs to SDAP 212 and SRBs to RRC 214.

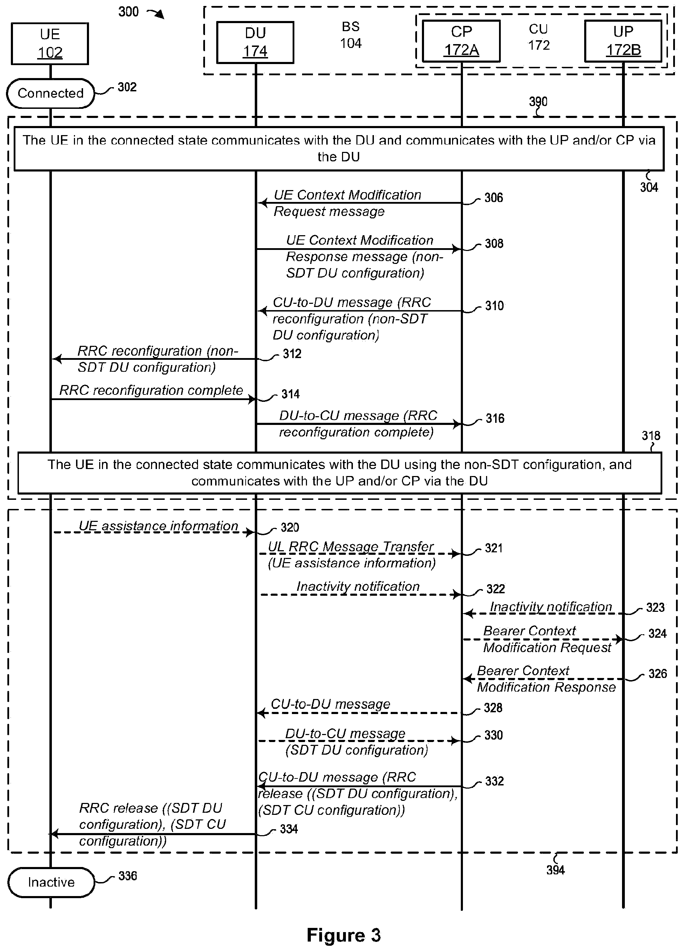

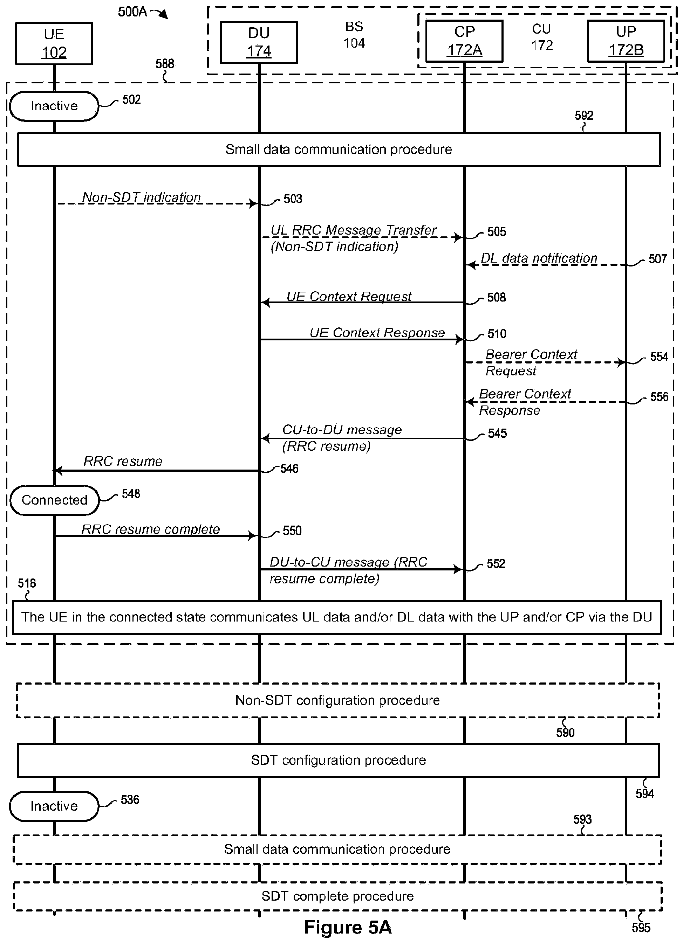

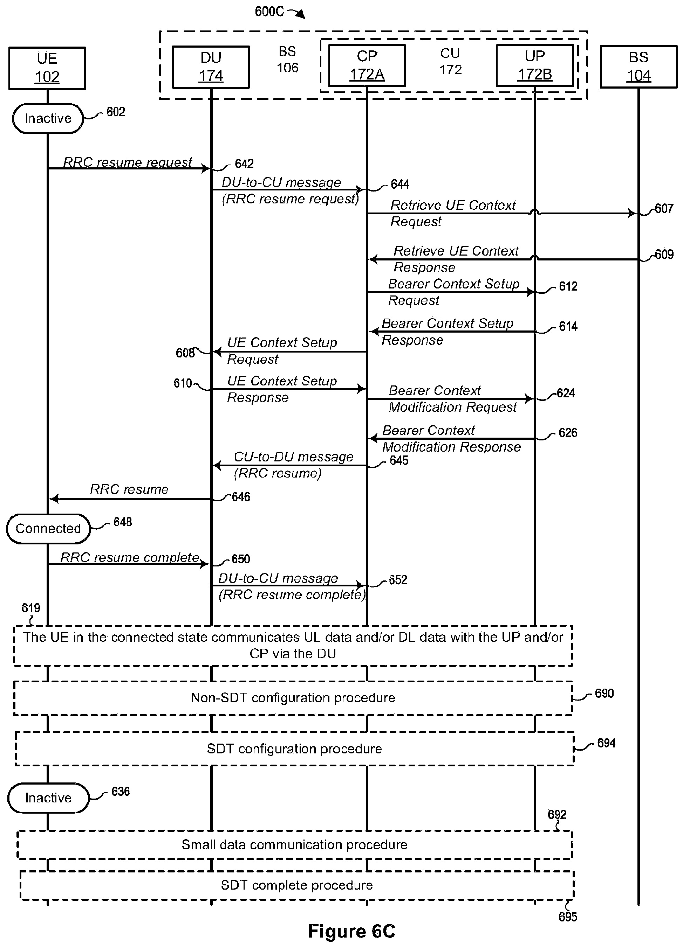

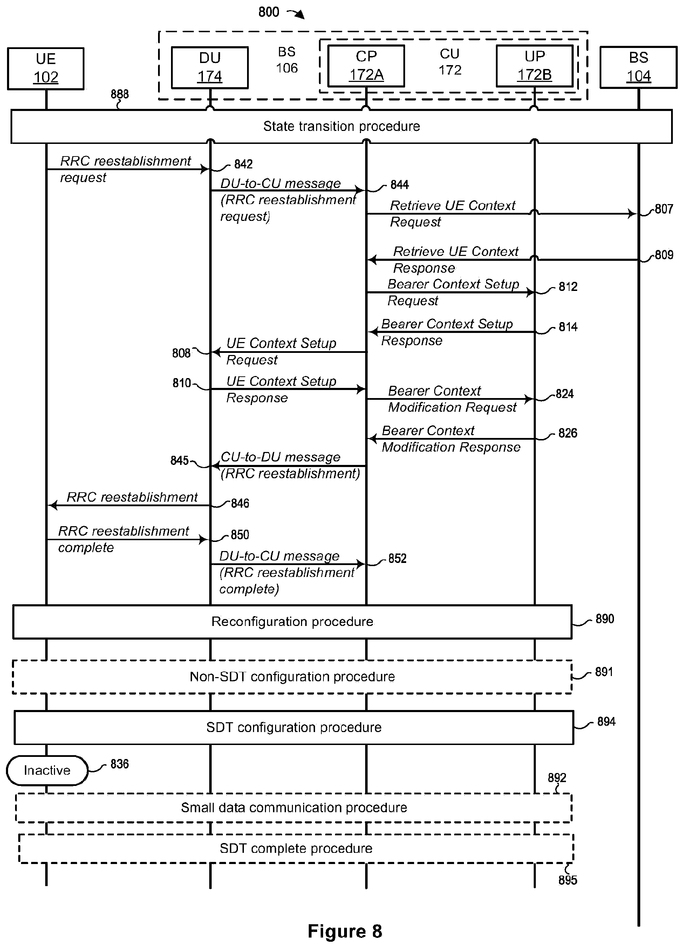

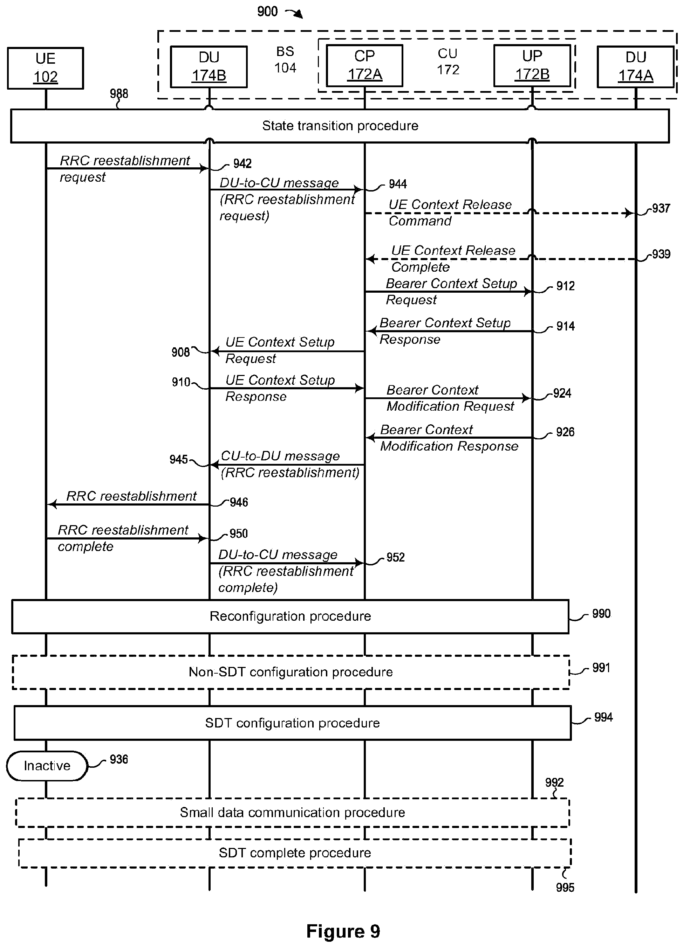

Next, several example scenarios that involve several components of Fig. 1A and relate to transmitting data in an inactive or idle state are discussed next with reference to Figs. 3-9. Generally speaking, events in Figs. 3-9 that are similar are labeled with similar reference numbers (e.g., event 508 in Figs. 5A-5B is similar to event 608 in Fig. 6C, event 808 in Fig 8, and event 908 in Fig. 9), with differences discussed below where appropriate. With the exception of the differences shown in the figures and discussed below, any of the alternative implementations discussed with respect to a particular event (e.g., for messaging and processing) may apply to events labeled with similar reference numbers in other figures. To simplify the following description, the "inactive state" is used and can represent the RRC _INACTIVE or RRC _IDLE state, and the "connected state" is used and can represent the RRC_CONNECTED state.

First, Fig. 3 illustrates a scenario 300, in which the base station 104 includes a central unit (CU) 172 and a distributed unit (DU) 174 and the CU 172 includes a CU-CP 172A and a CU-UP 172B. In the scenario 300, the UE 102 initially operates in a connected state 302 and communicates 304 with the DU 174 of the base station 104 by using a DU configuration (i.e., a first non-SDT configuration), and communicates 304 with the CU-CP 172A and/or CU-UP 172B via the DU by using a CU configuration (i.e., a first non-SDT CU configuration). While the UE 102 communicates 304 with the base station 104, the CU-CP 172A can transmit 306 a *UE Context Modification Request* message. In response, the DU 174 transmits 308 a *UE Context Modification Response* message including a non-SDT configuration (i.e., a second non-SDT configuration) for the UE 102 to the CU-CP 172A. The CU-CP 172A generates an RRC reconfiguration message, including the non-SDT DU configuration, and transmits 310 a first CU-to-DU message (e.g., *DL RRC Message Transfer* message), including the RRC reconfiguration message, to the DU 174. In turn, the DU 174 transmits 312 the RRC reconfiguration message to the UE 102. In response, the UE 102 transmits 314 an RRC reconfiguration complete message to the DU 174, which in turn transmits 316 a first DU-to-CU message (e.g., *UL RRC Message Transfer* message) including the RRC reconfiguration complete message to the CU-CP 172A.

After receiving 312 the RRC reconfiguration message, the UE 102 in the connected state communicates 318 with the DU 174 using the non-SDT DU configuration and communicates with the CU-CP 172A and/or CU-UP 172B via the DU 174. In cases where the RRC reconfiguration message does not include a CU configuration, the UE 102 communicates 318 with the CU-CP 172A and/or CU-UP 172B via the DU 174 using the first non-SDT CU configuration. In cases where the RRC reconfiguration message includes a non-SDT CU configuration (i.e., a second non-SDT CU configuration), the UE 102 communicates 318 with the CU-CP 172A and/or CU-UP 172B via the DU 174, using the second non-SDT CU configuration. In some implementations, the second non-SDT CU configuration can augment the first non-SDT CU configuration or include at least one new configuration parameter not included in the first non-SDT CU configuration. In some such cases, the UE 102, the CU-CP 172A and/or the CU-UP 172B communicate 318 with one another using the second non-SDU CU configuration and configuration parameters in the first non-SDT CU configuration not augmented by the second non-SDU CU configuration.

In some implementations, the first non-SDT CU configuration includes configuration parameters related to operations of RRC and/or PDCP protocol layers (e.g., RRC 214 and/or NR PDCP 210) that the UE 102 and CU 172 use to communicate with one another while the UE 102 operates in the connected state. In further implementations, the second non-SDT CU configuration also includes configuration parameters related to operations of the RRC and/or PDCP protocol layers. In some implementations, the first non-SDT CU configuration includes configuration parameters in a *RadioBearerConfig* information element (IE) and/or *MeasConfig* IE (e.g., as defined in 3GPP specification 38.331 v16.7.0). Similarly, the second non-SDT CU configuration includes configuration parameters in the *RadioBearerConfig* IE and/or *MeasConfig* IE. In some implementations, the first non-SDT CU configuration is or includes a *RadoBearerConfig* IE and/or a *MeasConfig* IE, and the second non-SDT CU configuration is or includes a *RadoBearerConfig* IE and/or *MeasConfig* IE.

In some implementations, the second non-SDT DU configuration can augment the first non-SDT DU configuration or include at least one new configuration parameter not included in the first non-SDT DU configuration. In some such cases, the UE 102 and the DU 174 communicate 318 with one another using the second non-SDU DU configuration and configuration parameters in the first non-SDT DU configuration not augmented by the second non-SDU DU configuration. In some implementations, the first non-SDT DU configuration includes configuration parameters related to operations of RRC, RLC, MAC, and/or PHY protocol layers (e.g., RLC 206B, MAC 204B and/or PHY 202B) that the UE 102 and DU 174 use to communicate with one another while the UE 102 operates in the connected state. In further implementations, the second non-SDT DU configuration includes configuration parameters related to operations of the RRC, RLC, MAC, and/or PHY protocol layers. In some implementations, the first non-SDT DU configuration includes configuration parameters in a *CellGroupConfig* IE (e.g., as defined in 3GPP specification 38.331). Similarly, the second non-SDT DU configuration includes configuration parameters in the *CellGroupConfig* IE. In some implementations, the first non-SDT DU configuration and the second non-SDT DU configuration are *CellGroupConfig* IEs.

The events 306, 308, 310, 312, 314, 316 and 318 are collectively referred to in Fig. 3 as a non-SDT resource (re)configuration procedure 390, which can be optional.

In some implementations, while the UE 102 communicates with the base station 104 or after the non-SDT resource (re-)configuration procedure 390 (if performed), the CU-CP 172A determines to cause the UE 102 to transition to an inactive state from the connected state, based on data inactivity of the UE 102 (i.e., the UE 102 in the connected state has no data activity with the base station 104). In some implementations, while the UE 102 communicates with the base station 104 or after the non-SDT resource (re-)configuration procedure 390 (if performed), the UE 102 determines or detects data inactivity and transmits 320, to the DU 174, UE assistance information (e.g., a *UEAssistanceInformation* message) indicating that the UE 102 prefers or requests to transition to the inactive state or leave the connected state. In some implementations, the UE 102 indicates, in the UE assistance information, that the UE 102 prefers or requests to transition to the inactive state with SDT configured. In turn, the DU 174 transmits 321 a UL RRC Message Transfer message including the UE assistance information to the CU-CP 172A. Thus, the CU-CP 172A determines that the UE 102 is in data inactivity based on the UE assistance information.

In other implementations, the DU 174 performs data inactivity monitoring for the UE 102. The CU-CP 172A can transmit a CU-to-DU message (e.g., a *UE Context Setup Request* message or a *UE Context Modification Request* message) to the DU 174 to request or command the DU 174 to perform the data inactivity monitoring. In some cases where the DU 174 detects or determines that the UE 102 is in data inactivity during the monitoring, the DU 174 transmits 322 an inactivity notification (e.g., *UE Inactivity Notification* message) to the CU-CP 172A. Thus, the CU-CP 172A can determine that the UE 102 is in data inactivity based on the inactivity notification received from the DU 174. In yet other implementations, the CU-UP 172B performs data inactivity monitoring for the UE 102. The CU-CP 172A can transmit a CP-to-UP message (e.g., a *Bearer Context Setup Request* message or a *Bearer Context Modification Request* message) to the CU-UP 172B to request or command the CU-UP 172B to perform the data inactivity monitoring. In cases where the CU-UP 172B detects or determines that the UE 102 is in data inactivity during the monitoring, the CU-UP 172B transmits 323 an inactivity notification (e.g., Bearer Context Inactivity Notification message) to the CU-CP 172A. Thus, the CU-CP 172A can determine that the UE 102 is in data inactivity based on the inactivity notification received from the CU-UP 172B. In some implementations, the CU-CP 172A determines that the UE 102 is in data inactivity based on the UE assistance information, inactivity notification of the event 322, and/or inactivity notification of the event 323.

After a certain period of data inactivity, the CU-CP 172A can determine that neither the CU 172 (i.e., the CU-CP 172A and/or the CU-UP 172B) nor the UE 102 has transmitted any data in the downlink direction or the uplink direction, respectively, during the certain period. In response to the determination, the CU-CP 172A determines to cause the UE 102 to transition to the inactive state with SDT configured. Alternatively, the CU-CP 172A determines to cause the UE 102 to transition to the inactive state without SDT configured in response to determining that the UE 102 is in data inactivity.

In response to or after determining that the UE 102 is in data inactivity (for the certain period) or determining to cause the UE 102 to transition to the inactive state with SDT configured, the CU-CP 172A sends 324, to the CP-CU 172B, a *Bearer Context Modification Request* message to suspend data transmission for the UE 102. In response, the CU-UP 172B suspends data transmission for the UE 102 and sends 326 a *Bearer Context Modification Response* message to the CU-CP 172A. In response to or after determining that the UE 102 is in data inactivity (for the certain period) or determining to cause the UE 102 to transition to the inactive state with SDT configured, the CU-CP 172A in some implementations sends 328 a second CU-to-DU message (e.g., a *UE Context Modification Request* message) to instruct the DU 174 to provide an SDT DU configuration for the UE 102. In some implementations, the CU-CP 172A includes an SDT request indication (e.g., an IE such as a CG-SDT Query Indication IE or SDT Query Indication IE) to request an SDT DU configuration in the second CU-to-DU message. In response to the SDT request indication or the second CU-to-DU message, the DU 174 can transmit 330 a second DU-to-CU message (e.g., *UE Context Modification Response* message) to the CU-CP 172A. Alternatively, the DU 174 does not include the SDT DU configuration in the second DU-to-CU message. Instead, the DU 174 sends to the CU-CP 172A an additional DU-to-CU message (e.g., *UE Context Modification Required* message) including the SDT DU configuration, after receiving the second CU-to-DU message or transmitting the second DU-to-CU message.

In some implementations, the CU-CP 172A transmits an additional CU-to-DU message (e.g., *UE Context Modification Confirm* message) to the DU 174 in response to the additional CU-to-DU message. In some alternative implementations, the CU-CP 172A transmits the second CU-to-DU message and receives the second DU-to-CU message or the additional DU-to-CU message before determining that the UE 102 is in data inactivity. In other alternative implementations, the CU-CP 172A includes the SDT request indication in the first CU-to-DU message of the event 308 and the DU 174 includes the SDT DU configuration in the first DU-to-CU message of the event 310 in response to the SDT request indication.

In some alternative implementations, the DU 174 does not transmit an SDT DU configuration for the UE 102 to the CU-CP 172A because the DU 174 is congested or does not have sufficient resources. Thus, the DU 174 neither includes the SDT DU configuration in the second DU-to-CU message nor transmits the additional DU-to-CU message to the CU-CP 172A.

In response to determining to cause the UE 102 to transition to the inactive state with SDT configured, the CU-CP 172A can generate an RRC release message (e.g., *RRCRelease* message *RRCConnectionRelease* message) to cause the UE 102 to transition to the inactive state. In some implementations, the CU-CP 172A may include a suspend configuration (e.g., SuspendConfig IE) in the RRC release message. The CU-CP 172A can include the SDT DU configuration (if obtained from the DU 174) and/or an SDT CU configuration in the RRC release message. The CU-CP 172A then sends 332 to the DU 174 a third CU-to-DU message (e.g., a *UE Context Release Command* message, a *UE Context Modification Request* message or a *DL RRC Message Transfer* message) which includes the RRC release message. In turn, the DU 174 transmits 334 the RRC release message to the UE 102. In some implementations, the DU 174 generates a MAC PDU including the RRC release message and transmits 334 the MAC PDU to the UE 102. The RRC release message instructs the UE 102 to transition to the inactive state. The UE 102 transitions 336 to the inactive state from the connected state upon receiving the RRC release message. Depending on the implementation, in response to the third CU-to-DU message, the DU 174 retains the SDT DU configuration (if generated by the DU 174 during the procedure 328, 330) and/or releases or retains at least some of the first non-SDT DU configuration and/or at least some of second non-SDT DU configuration. The DU 174 can send a third DU-to-CU message (e.g., a *UE Context Release Complete* message or a *UE Context Modification Response* message) to the CU-CP 172A in response to the third CU-to-DU message.

The UE 102 monitors a PDCCH using a C-RNTI to receive a DCI, while operating 302 in the connected state. In response to or after receiving 334 the RRC release message, the UE 102 stops using the C-RNTI to monitor a PDCCH. In some implementations, the UE 102 retains the C-RNTI in response to or after receiving 334 the RRC release message or transitioning 336 to the inactive state from the connected state. In some implementations, the UE 102 performs a two-step or a four-step random access procedure with the base station 104 (e.g., the CU-CP 172A and/or DU 174) and receives, from the DU 174, a random access response message including the C-RNTI in the random access procedure. In other implementations, the UE 102 receives an RRC message (e.g., RRC reconfiguration message) including the C-RNTI from the CU-CP 172A via the DU 174 or another base station (e.g., base station 106) not shown in Fig. 3.

The events 320, 321, 322, 323, 324, 326, 328, 330, 332, and 334 are collectively referred to in Fig. 3 as an SDT configuration procedure 394.

In some implementations, the UE 102 releases at least a portion of the first non-SDT DU configuration and/or at least a portion of the second non-SDT DU configuration in response to the RRC release message. In other implementations, if the RRC release message instructs the UE 102 to transition to the inactive state (i.e., RRC_IDLE), the UE 102 releases the first non-SDT DU configuration and/or second non-SDT configuration. In yet other implementations, if the RRC release message instructs the UE to transition to the inactive state (i.e., RRC_INACTIVE), the UE 102 releases a first portion of the first and/or second non-SDT DU configurations and retains a second portion of the first and/or second non-SDT DU configurations. In still other implementations, if the RRC release message instructs the UE 102 to transition to the inactive state (i.e., RRC_INACTIVE), the UE 102 retains the first non-SDT DU configuration (not augmented by the second non-SDT DU configuration if received) and/or second non-SDT DU configuration.

In some implementations, the CU-CP 172A does not include an indication in the third CU-to-DU message to instruct the DU 174 to retain the SDT DU configuration. The DU 174 retains the SDT DU configuration as described above. In other implementations, the CU-CP 172A can include an indication in the third CU-to-DU message (e.g., a *UE Context Release Command* message) to instruct the DU 174 to retain the SDT DU configuration, and the DU 174 retains the SDT DU configuration in response to the indication. In some such implementations, if the *UE Context Release Command* message excludes the indication, the DU 174 releases the SDT DU configuration. In yet other implementations, the CU-CP 172A does not include an indication in the third CU-to-DU message (e.g., a *UE Context Modification Request* message or a *DL RRC Message Transfer* message) for the UE 102 to instruct the DU 174 to release the SDT DU configuration. Thus, the DU 174 retains the SDT DU configuration in response to the third CU-to-DU message excluding the indication. If the third CU-to-DU message includes the indication, the DU 174 releases the SDT DU configuration.

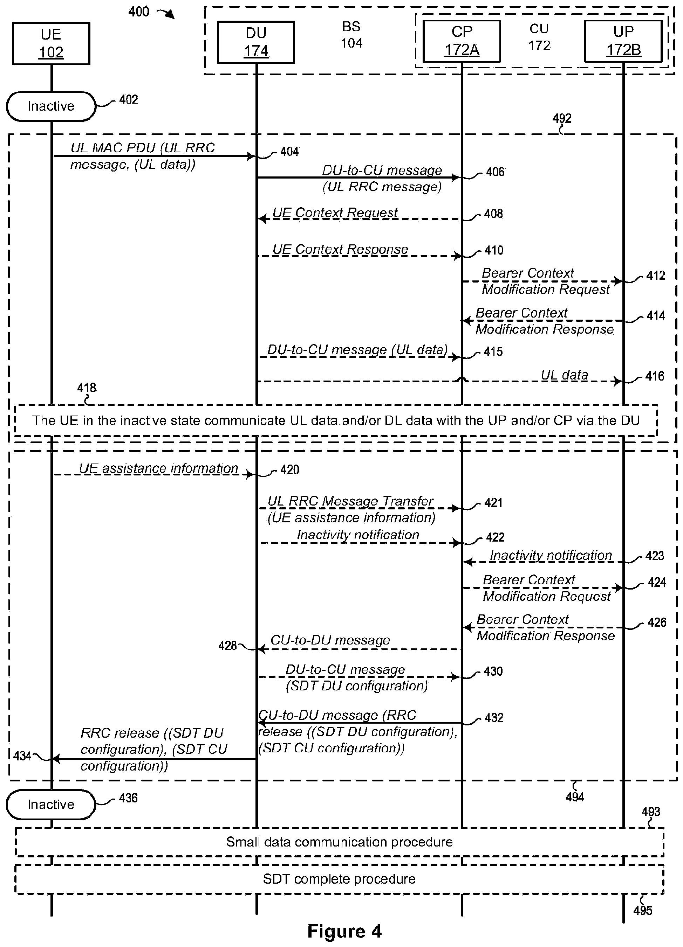

In some implementations, the SDT CU configuration (e.g., *SDT-Config* IE) includes an SDT DRB list (e.g., a *std-DRB-List*) including a list of DRB ID(s) indicating ID(s) of DRB(s) configured for SDT. In some implementations, the SDT CU configuration includes an SRB2 indication (e.g., *sdt-SRB2-Indication*) indicating an SRB2 configured for SDT. In some implementations, the SDT CU configuration includes a compression protocol continue indication (e.g., *sdt-DRB-ContinueROHC)* indicating whether a PDCP entity for the DRB(s) configured for SDT continues during SDT operation (i.e., initial and/or subsequent SDT described for Fig. 4). For example, the compression protocol can be a Robust Header Compression (ROHC). In some implementations, the SDT CU configuration includes a data volume threshold (e.g., *sdt-DataVolumeThreshold*) for the UE 102 to determine whether the UE 102 can initiate SDT. In some implementations, the CU-CP 172A includes the SDT DU configuration in the SDT CU configuration. In some implementations, the "SDT CU configuration" is simplified to "SDT configuration".

In some implementations, the SDT DU configuration includes at least one of a buffer status reporting (BSR) configuration, a power headroom reporting (PHR) configuration, configured grant (CG) configuration(s) for CG-SDT, a UL bandwidth part (BWP) configuration, a DL BWP configuration for CG-SDT, a time alignment timer value for CG-SDT (e.g., CG-SDT time alignment timer (CG-SDT-TAT) value), and/or a timing advance validity threshold for CG-SDT. In some implementations, the UL BWP configuration configures a dedicated UL BWP for the UE 102 to perform CG-SDT. The UL BWP configuration can include the CG configuration(s), a PUCCH configuration, a PUSCH configuration, and/or a sounding reference signal (SRS) configuration. In some implementations, the DL BWP configuration configures a dedicated DL BWP for the UE 102 during CG-SDT. In further implementations, the DL BWP configuration includes a PDCCH configuration and/or a PDSCH configuration for the UE 102 to receive DL control signals on PDCCH(s) and data on PDSCH(s) from the DU 174 while the UE performs CG-SDT with the DU 174. Each of the CG configuration(s) configures periodic radio resources (i.e., CG resources) that the UE 102 can use to transmit data without receiving a dynamic grant for data transmission. Each of the CG configuration(s) configures or includes a periodicity indicating CG resources periodically occur. In some implementations, the periodicity is a fixed number of symbols, slots, or subframes. Some or all of the CG configuration(s) can have the same periodicity or different periodicities.

In some implementations, each of the CG configuration(s) configures or includes an offset indicating a time domain offset (e.g., timeDomainOffset), related to a reference time (e.g., system frame number (SFN)), for the CG resources. In some implementations, the CG configuration can configure or include the reference time (e.g., timeReferenceSFN). In further implementations, the CG configuration is or is similar to a *ConfiguredGrantConfig* IE (e.g., as specified in 3GPP specification 38.331). The DU 174 configures the timing advance validity threshold (e.g., including an RSRP range) for the UE 102 to determine whether the UE 102 can initiate SDT using the configured grant configuration for CG-SDT as described for Fig. 4. Depending on the implementation and in accordance with the timing advance validity threshold, the UE 102 evaluates whether a stored timing advance value is still valid. If the UE 102 determines that the stored timing advanced value is invalid, the UE 102 initiates an RA-SDT with the CU 172 via the DU 174 as described for Fig. 4. In some implementations, the SDT DU configuration is an *SDT-MAC-PHY-CG-Config* IE, *SDT-MAC-PHY-Config* IE, *SDT-CellConfig* IE, or *SDT-CellGroupConfig* IE. In some implementations, the "SDT DU configuration" is replaced by "CG-SDT configuration(s)". In such implementations, the configurations in the SDT DU configuration are specific for CG-SDT. In other implementations, some of the configuration(s) in the SDT DU configuration described above are grouped into CG-SDT configuration(s) and the other configuration(s) (e.g., the BSR configuration and/or PHR configuration) in the SDT DU configuration are not CG-SDT configuration(s). The SDT DU configuration includes the CG-SDT configuration(s). In some such cases, the other configuration(s) are configured for CG-SDT or RA-SDT.

In some implementations, the DU 174 starts or restarts a DU CG-SDT timer in response to or after receiving the SDT request indication, generating the CG-SDT configuration(s), receiving 328 the second CU-to-DU message, transmitting 330 the CG-SDT configuration(s) to the CU 172, receiving 332 the third CU-to-DU message, or transmitting 334 the CG-SDT configuration(s) to the UE 102. In further implementations, the DU 174 starts or restarts the DU CG-SDT timer with a timer value to manage the CG-SDT configuration(s). In some implementations, the timer value is the same as the CG-SDT time alignment timer value. In other implementations, the timer value is close to the CG-SDT time alignment timer value. For example, the timer value can be larger than and close to the CG-SDT time alignment timer value. In another example, the timer value can be smaller than and close to the CG-SDT time alignment timer value. When the DU CG-SDT timer expires, the DU 174 releases the CG-SDT configuration(s) or the CG resources configured in the CG-SDT configuration(s). When or after releasing the CG-SDT configuration(s), the DU 174 refrains from receiving PUSCH transmissions from the UE 102 on the radio resources that were reserved or configured for the CG-SDT configuration(s) and/or schedules transmissions for other UE(s) on the radio resources that were reserved or configured for the CG-SDT configuration(s).

As described above, the RRC release message 334 in some implementations includes the CG-SDT configuration(s). Depending on the implementation, the UE 102 starts or restarts a UE CG-SDT timer (e.g., CG-SDT-TAT) in response to or after receiving the CG-SDT configuration(s). In some implementations, the UE 102 starts or restarts the UE CG-SDT timer (i.e., a first UE CG-SDT timer) with the CG-SDT time alignment timer value, in response to or after receiving the CG-SDT configuration(s). When the UE CG-SDT timer expires, the UE 102 can release the CG-SDT configuration(s). Alternatively, when the UE CG-SDT timer expires, the UE 102 retains the CG-SDT configuration(s) and refrains from transmitting UL transmissions (e.g., MAC PDUs) on the CG resources. In some such implementations, the UE 102 releases the CG resources or determines that the CG resources are not valid. When the UE CG-SDT timer expires, the UE 102 can release the SRS configuration or SRS resources configured in the SRS configuration. Alternatively, when the UE CG-SDT timer expires, the UE 102 retains the SRS configuration and refrains from transmitting one or more SRSs to the DU 174 on the SRS resources.

While the UE CG-SDT timer is running, the UE 102 in the inactive state communicates (e.g., performs CG-SDT, transmits SRS(s), and/or receives DL control signals (e.g., DCI) and/or data) with the DU 174 via the dedicated DL BWP and dedicated UL BWP. In some implementations, when the UE CG-SDT timer expires, the UE 102 in the inactive state switches to an initial DL BWP and an initial UL BWP from the dedicated DL BWP and dedicated UL BWP, respectively. In some such cases, the UE 102 retunes transceivers of the UE 102 to switch to the initial DL BWP and initial UL BWP. In some implementations, the UE 102 in the inactive state switches to the initial DL BWP and initial UL BWP to perform a random access procedure, while the UE 102 is configured with the CG-SDT configuration. The UE 102 can perform the random access procedure for different cases as described below. In some implementations, the UE 102 in the inactive state switches to the initial DL BWP and initial UL BWP to perform measurements on SSBs transmitted by the DU 174 on the initial DL BWP.

In some implementations, the DU 174 or CU-CP 172A configures the dedicated DL BWP and dedicated UL BWP to be the same as or include the initial DL BWP and initial UL BWP, respectively. In some such implementations, when the UE CG-SDT timer expires, the UE 102 does not switch to the initial DL BWP and initial UL BWP form the dedicated DL BWP and dedicated UL BWP, respectively. In some such cases, the UE 102 does not retune transceivers of the UE 102 due to switching BWPs. In further such cases, when the UE 102 in the inactive state performs a random access procedure with the DU 174, the UE 102 performs the random access procedure without switching to the initial DL BWP and initial UL BWP. In still further such cases, the UE 102 performs measurements on SSBs transmitted by the DU 174 within the initial DL BWP, while performing CG-SDT with the DU 174.

In some implementations, in response to or after the UE CG-SDT timer expiring, the UE 102 performs RA-SDT with the CU 172 via the DU 174 on the initial UL BWP and initial DL BWP, as described for Fig. 4. That is, the UE 102 determines that RA-SDT is valid in response to or after the UE CG-SDT timer expires.

In some implementations, the DU 174 reserves CG resources configured in the CG configuration(s). In some implementations, the DU 174 releases the CG resources when releasing the SDT DU configuration or the CG-SDT configuration(s), or when the DU CG-SDT timer expires. In some implementations, the DU 174 releases the SRS resources configured in the SRS configuration when releasing the SDT DU configuration or the CG-SDT configuration(s), or when the DU CG-SDT timer expires.

In cases where the DU 174 does not provide the CG-SDT configuration(s) or the SDT DU configuration to the CU-CP 172A, the DU 174 releases all signaling and user data transport resources for the UE 102 in response to the third CU-to-DU message. In cases where the DU 174 provides the SDT DU configuration or the CG-SDT configuration(s) to the CU-CP 172A, the DU 174 retains signaling and user data transport resources for the UE 102 in response to or after receiving the third CU-to-DU message.

In cases where the SDT DU configuration does not include a configuration for CG-SDT, the CU-CP 172A and/or the DU 174 only configures RA-SDT for the UE 102. In some such cases, the UE 102 performs RA-SDT with the CU 172 via the DU 174 as described for Fig. 4.

In some implementations, the CU-CP 172A does not request the DU 174 to provide an SDT DU configuration when determining to cause the UE 102 to transition to the inactive state with SDT configured. In some such cases, the events 328 and 330 are omitted, and the CU-CP 172A does not include the SDT DU configuration in the RRC release message. Alternatively, the CU-CP 172A generates the SDT DU configuration without requesting the DU 174 to provide an SDT DU configuration and include the SDT DU configuration in the RRC release message.

In some implementations, the DU 174 does not include an SDT DU configuration in the second DU-to-CU message (e.g., if or because the UE 102 does not support CG-SDT, the DU 174 does not support CG-SDT, or the DU 174 does not have available radio resources for CG-SDT). In such cases, the RRC release message does not include an SDT DU configuration. Otherwise, the DU 174 can transmit an SDT DU configuration to the CU-CP 172A as described above. In some implementations, the DU 174 does not include a configuration for CG-SDT in the SDT DU configuration in the second DU-to-CU message (e.g., if or because the UE 102 does not support CG-SDT, the DU 174 does not support CG-SDT, or the DU 174 does not have available radio resources for CG-SDT). In some such cases, the SDT DU configuration does not include a CG-SDT configuration. Otherwise, the DU 174 can include the CG-SDT configuration(s) in the SDT DU configuration as described above.

In some implementations, the CU-CP 172A may request the DU 174 to provide an SDT DU configuration as described above, such as in cases where the UE 102 supports CG-SDT and/or the DU 174 supports CG-SDT. In cases where the UE 102 does not support CG-SDT or the DU 174 does not support CG-SDT, the CU-CP 172A does not request the DU 174 to provide an SDT DU configuration. Depending on the implementation, the CU-CP 172A receives a UE capability (e.g., *UE-EUTRA-Capability* IE, *UE-NR-Capability* IE, or *UE-6G-Capability* IE) for the UE 102 from the UE 102, the CN 110 (e.g., MME 114 or AMF 164), or the base station 106, while the UE operates 302 in the connected state. The UE capability indicates whether the UE 102 supports CG-SDT. Thus, the CU-CP 172A can determine whether the UE supports CG-SDT in accordance with the UE capability. In some implementations, the CU-CP 172A receives, from the DU 174, a DU-to-CU message indicating whether the DU 174 supports CG-SDT. The DU-to-CU message can be the second DU-to-CU message, the message of the event 308 or 316, or a non-UE associated message (e.g., a non-UE associated F1AP message as defined in 3GPP specification 38.473).

In some implementations, the DU 174 determines whether to provide an SDT DU configuration for the UE 102 to the CU-CP 172A, depending on whether the UE 102 supports CG-SDT. Depending on the implementation, in addition to whether the UE 102 supports CG-SDT, the DU 174 additionally determines whether to provide an SDT DU configuration for the UE 102 to the CU-CP 172A depending on whether the DU 174 supports CG-SDT. In cases where the UE 102 supports CG-SDT and/or the DU 174 supports CG-SDT, the DU 174 provides an SDT DU configuration for the UE 102 to the CU-CP 172A as described above. In cases where the UE 102 does not support CG-SDT or the DU 174 does not support CG-SDT, the DU 174 does not provide an SDT DU configuration for the UE 102 (e.g., the DU 174 does not include the SDT DU configuration in the second DU-to-CU message). The DU 174 can receive the UE capability from the CU-CP 172A, while the UE operates 302 in the connected state or in the inactive state before the event 302. Thus, the DU 174 can determine whether the UE 102 supports CG-SDT in accordance with the UE capability. In some implementations, the DU 174 sends a DU-to-CU message to the CU-CP 172A to indicate whether the DU 174 supports CG-SDT, as described above.

Referring now to Fig. 4, a scenario 400 depicts small data transmission. While the UE 102 in scenario 300 begins in a connected state (e.g., event 302), the scenario 400 illustrates a procedure for when the UE 102 begins in an inactive state (e.g., event 402). In the scenario 400, the base station 104 includes a CU 172 and a DU 174. The CU 172 includes a CU-CP 172A and a CU-UP 172B. In the scenario 400, the UE 102 initially operates 402 in an inactive state with SDT configured. In some implementations or scenarios, the UE 102 transitions to the inactive state from the connected state with SDT configured, as described for Fig. 3. In such implementations, the UE receives a first SDT CU configuration and/or a first SDT DU configuration in an RRC release message (e.g., similar to event 334). In other implementations or scenarios, the UE 102 transitions to the inactive state with SDT configured from the inactive state without SDT configured. For example, the UE 102 receives, from a base station (e.g., the base station 104 or base station 106), an RRC release message causing the UE 102 to transition to the inactive state and not configuring SDT (e.g., indicating releasing SDT or not including an SDT configuration in the RRC release message). In some such implementations, the UE 102 transitions to the inactive state without SDT configured in response to the RRC release message. The UE 102 in the inactive state, with or without SDT configured, performs a RAN notification area (RNA) update with the base station without state transitions. During the RNA update, the UE 102 receives another RRC release message including a first SDT CU configuration and/or a first SDT DU configuration from the base station (e.g., similar to the RRC release message in event 334).

Later in time, the UE 102, operating in the inactive state with SDT configured, initiates SDT. In response to or after initiating SDT, the UE 102 generates an initial UL MAC PDU, which includes a UL RRC message, and transmits 404 the initial UL MAC PDU to the DU 174 on a cell (e.g., the cell 124 or another cell of the base station 104 not shown in Fig. 1A). The following events between the UE 102 and the DU 174 occur on the cell.

In some implementations, the UE 102 starts an SDT session timer in response to initiating the SDT. In some implementations, the SDT session timer is a new timer (e.g., T319a defined in an RRC specification (e.g., v17.0.0)). The DU 174 retrieves the UL RRC message from the initial UL MAC PDU, generates a first DU-to-CU message including the UL RRC message, and sends 406 the first DU-to-CU message to the CU-CP 172A. In some implementations, the first DU-to-CU message is an *Initial UL RRC Message Transfer* message. In other implementations, the first DU-to-CU message is a *UL RRC Message Transfer* message.

In scenarios in which the UE 102 initiates SDT to transmit UL data (e.g., a data packet) qualifying for SDT, the UE 102 transmits 404 an initial UL MAC PDU including the UL data. In scenarios in which the UE 102 initiates SDT to receive DL data, the UE 102 transmits 404 an initial UL MAC PDU without an UL data packet. Depending on the implementation, the UE 102 initiates SDT to receive DL data in response to receiving (not shown) a paging message from the DU 174. In some such scenarios, the UE 102 includes an SDT indication in the initial UL MAC PDU or the UL RRC message to indicate to the base station 104 that the UE 102 is initiating SDT to receive DL data.

In some implementations, the UE 102 in the inactive state performs a random access procedure with the DU 174 to transmit 404 the UL MAC PDU. In some such cases, the SDT is an RA-SDT. For example, the random access procedure can be a four-step random access procedure or a two-step random access procedure. In cases where the procedure is a four-step random access procedure, the UE 102 transmits a random access preamble to the DU 174 and, in response, the DU 174 transmits, to the UE 102, a random access response (RAR), including a dynamic uplink grant, a temporary C-RNTI, and a timing advance command. The UE 102 then transmits 404 the UL MAC PDU to the DU 174 in accordance with the dynamic uplink grant. The DU 174 receives 404 the UL MAC PDU in accordance with the dynamic uplink grant in the RAR and transmits a DL MAC PDU including a contention resolution MAC control element to the UE 102 in response.

In cases where the procedure is a two-step random access procedure, the UE 102 transmits 404, to the DU 174, a message A (MsgA) including a random access preamble and the UL MAC PDU in accordance with two-step random access configuration parameters. The UE 102 receives a message B (MsgB) including a temporary C-RNTI and a timing advance command from the DU 174 in response to the MsgA. The DU 174 includes a contention resolution MAC control element in the MsgB. The UE 102 receives the two-step random access configuration parameters in a system information broadcast by the DU 174 on the cell 124 before transmitting 404 the UL MAC PDU. The DU 174 receives 404 the UL MAC PDU in accordance with the two-step random access configuration parameters.

When the UE 102 successfully performs a contention resolution in the random access procedure (i.e., receives the contention resolution MAC control element), the UE 102 discards a previously retained C-RNTI (e.g., as described for Fig. 3) and determines the temporary C-RNTI to be a C-RNTI (i.e., a new C-RNTI). The UE 102 monitors a PDCCH from the DU 174 using the C-RNTI to communicate 418 data (e.g., UL data and/or DL data) with the base station 104. In details, the UE 102 receives a DCI and a cyclic redundancy check (CRC) for the DCI on a PDCCH from the DU 174 and verifies the CRC using the C-RNTI. The DCI can include a dynamic uplink grant or a downlink assignment. If the UE 102 verifies the CRC is correct and the DCI includes a dynamic uplink grant, the UE 102 uses the dynamic uplink grant to transmit 418 UL data to the DU 174. If the UE 102 verifies the CRC is correct and the DCI includes a downlink assignment, the UE 102 uses the downlink assignment to receive 418 DL data from the DU 174. In some implementations, the DU 174 scrambles the CRC using the C-RNTI, and the UE 102 verifies the scrambled CRC using the C-RNTI.

In other implementations, the UE 102 transmits 404 the UL MAC PDU on CG resources in cases where the UE 102 receives or the RAN 105 configures the UE 102 with CG configuration(s), as described for Fig. 3. In such cases, the UE 102 performs CG-SDT. In some implementations, the UE 102 does not perform a random access procedure for transmitting 404 the UL MAC PDU. Thus, the DU 174 receives 404 the UL MAC PDU on the CG resources. In some such implementations, after generating or transmitting 404 the UL MAC PDU, the UE 102 starts a UE timer (e.g., a second UE CG-SDT timer) if the CU-CP 172A or the DU 174 configures the UE 102 to apply the UE timer during SDT. In some implementations, the UE 102 starts the UE timer with a UE timer value (e.g., *cg-SDT-RetransmissionTimer* value). After transmitting 404 the UL MAC PDU, when the UE 102 receives a DCI and a CRC for the DCI on a PDCCH from the DU 174 and verifies that the CRC is correct using the C-RNTI, the UE 102 stops the UE timer. In some implementations, the DU 174 scrambles the CRC using the C-RNTI, and the UE 102 verifies the scrambled CRC using the C-RNTI.

In further implementations, the UE 102 receives 432, 434 an RRC release message including the UE timer value from the base station 104, similar to the events 332, 334. The CU-CP 172A includes the UE timer value in a CG-SDT configuration and transmits the RRC release message including the CG-SDT configuration to the UE 102 via the DU 174. In other implementations, the UE 102 receives the UE timer value in a system information block broadcast by the DU 174 via the cell 124. While the UE timer is running, the UE 102 in the inactive state or SDT session refrains from retransmitting the UL MAC PDU on the CG resources. In some implementations, in response to or after receiving 404 the UL MAC PDU on the CG resources, the DU 174 starts a DU timer (e.g., a second DU CG-SDT timer) with a DU timer value. In some implementations, the DU timer value is the same as or larger than the UE timer value. While the DU timer is running, the DU 174 processes UL transmissions received from the UE 102 on the CG resources as new transmissions.

In some implementations, the UE 102 transmits 418 subsequent UL MAC PDU(s), including one or more UL data packets, on the CG radio resources. In further implementations, the UE 102 transmits 418 the subsequent UL MAC PDU(s,) on radio resources configured in dynamic uplink grant(s) received on PDCCH(s) from the DU 174. In some implementations, the UE 102 transmits 418 some of the subsequent UL MAC PDU(s) on radio resources configured in the CG configuration and transmits 418 the remainder of the subsequent UL MAC PDU(s) on radio resources configured in the dynamic uplink grant(s).

In some implementations where the UE 102 transmits 418 subsequent UL MAC PDU(s) on the CG resources, the UE 102 starts or restarts the timer (e.g., the second UE CG-SDT timer) after generating or transmitting 418 each of the subsequent UL MAC PDU(s). Depending on the implementation, the UE 102 starts or restarts the timer with the timer value as described above. While the UE timer runs, the UE 102 in either the inactive state or SDT session refrains from retransmitting the UL MAC PDU. In some implementations, in response to or after receiving 418 each of the subsequent UL MAC PDU(s) on the CG resources, the DU 174 starts or restarts the DU timer (e.g., the second DU CG-SDT timer) with the DU timer value. While the DU timer is running, the DU 174 processes UL transmissions received from the UE 102 on the CG resources as new transmissions. In other implementations, the DU 174 processes 404, 418 the UL MAC PDU(s) without starting the DU timer.

If the UE 102 includes UL data in the initial UL MAC PDU 404, the DU 174 retrieves the UL data from the initial UL MAC PDU. In some such cases, the DU 174 includes the UL data in the DU-to-CU message of the event 406. Alternatively, the DU 174 sends 415 a DU-to-CU message including the UL data to the CU-CP 172A. In such an alternative implementation, the UL data includes or is a PDCP PDU, an RRC PDU, NAS PDU, or an LTE positioning protocol (LPP) PDU. Depending on the implementation, the PDCP PDU includes an RRC PDU. In further implementations, the DU 174 sends 416 the UL data to the CU-UP 172B separately via a user-plane (UP) connection as described below. In some such implementations, the UL data includes or is a PDCP PDU, and the PDCP PDU includes an SDAP PDU, an IP packet, or an Ethernet packet.

After receiving 406 the first DU-to-CU message, the CU-CP 172A, in some implementations, sends 408 a *UE Context Setup Request* message to the DU 174 to establish a UE Context of the UE 102 at the DU 174. In some implementations, the CU-CP 172A includes transport layer information for one or more GTP-U tunnels between the CU-UP 172B and DU 174 in the *UE Context Setup Request* message. As such, the DU 174 can transmit the UL data and/or subsequent UL data (e.g., in small data communication 418) via the one or more GTP-U tunnels to the CU-UP 172B. In response, the DU 174 sends 410 a *UE Context Setup Response* message to the CU-CP 172A. After receiving 406 the first DU-to-CU message, transmitting 408 the *UE Context Setup Request* message, or receiving 410 the *UE Context Setup Response* message, the CU-CP 172A transmits 412 a *Bearer Context Modification Request* message to resume data transmission for the UE 102 to the CU-UP 172B. In response, the CU-UP 172B resumes data transmission for the UE 102 and transmits 414 a *Bearer Context Modification Response* message to the CU-CP 172A. In some cases where the UL data of the event 404 includes an RRC message or is associated with an SRB (e.g., SRB1 or SRB2), after receiving 408 the *UE Context Setup Request* message or transmitting 410 the *UE Context Setup Response* message, the DU 174 transmits 415 the DU-to-CU message including the UL data to the CU-CP 172A. In some cases where the UL data is associated with a DRB, the DU 174 transmits 416 the UL data to the CU-UP 172B. In some cases, such as where the CU-CP 172A determines that the DU 174 already has a UE context of the UE 102, the CU-CP 172A omits the events 408 and 410, such as, for example, when the CU-CP 172A commands the DU 174 to retain the UE context of the UE 102 in the case for CG-SDT as described above. In some such cases, the CU-CP 172A transmits a *UE Context Modification Request* message to the DU 174 to modify the UE context instead of the *UE Context Setup Request* message, and the DU 174 transmits a *UE Context Modification Response* message in response.

In some implementations, the CU-CP 172A includes transport layer information for the CU-UP 172B in the *UE Context Setup Request* message. The transport layer information for the CU-UP 172B can include an IP address and/or an uplink tunnel endpoint ID (e.g., TEID). The DU 174 transmits 416 the UL data to the CU-UP 172B using the transport layer information for the CU-UP 172B. In some cases where the UE 102 has subsequent UL data (e.g., one or more UL data packets) to transmit, the UE 102 transmits 418 one or more subsequent UL MAC PDUs including the subsequent UL data to the DU 174. In turn, the DU 174 retrieves the subsequent UL data from the subsequent UL MAC PDU(s). In cases where the subsequent UL data is associated with one or more SRB (e.g., SRB 1 and/or SRB2), the DU 174 transmits 416 the one or more DU-to-CU messages (e.g., UL RRC Message Transfer message(s)) including the subsequent UL data to the CU-CP 172A. Each DU-to-CU message can include a particular UL data packet of the subsequent UL data. In some cases where the CU-CP 172A receives DL data from the CN 110 or edge server, the CU-CP 172A transmits 416 one or more CU-to-DU messages (e.g., DL RRC Message Transfer message(s)) including the DL data (e.g., one or more DL data packets) to the DU 174. In turn, the DU 174 transmits 416 one or more DL MAC PDUs including the DL data to the UE 102 operating in the inactive state. In some implementations, the DL data includes NAS PDU(s) and/or LPP PDU(s).

In cases where the subsequent UL data is associated with one or more DRBs, the DU 174 transmits 418 the subsequent UL data to the CU-UP 172B, similar to the event 416. In some implementations, the DU 174 includes DU transport layer information for the DU 174 in the *UE Context Setup Response* message. In turn, the CU-CP 172A includes the transport layer information of the DU 174 in the *Bearer Context Modification Request* message. Depending on the implementation, the transport layer information of the DU 174 includes an IP address and/or a downlink TEID. In some cases where the CU-UP 172B receives DL data from the CN 110 or edge server, the CU-UP 172B transmits 418 the DL data (e.g., one or more DL data packets) to the DU 174 using the transport layer information of the DU 174. In turn, the DU 174 transmits 418 one or more DL MAC PDUs including the DL data to the UE 102 operating in the inactive state.

In some implementations, the UE 102 includes a buffer status report or a power headroom report in the initial and/or subsequent UL MAC PDU(s), in accordance with the BSR configuration and/or PHR configuration, respectively. In the buffer status report, the UE 102 includes or indicates a buffer status for one or more logical channels or logical channel groups. In the power headroom report, the UE 102 includes or indicates a power headroom status or value.

In some example scenarios, the subsequent UL data and/or DL data described above includes Internet Protocol (IP) packet(s), Ethernet packet(s), or application packet(s). In other scenarios, the UL data includes PDU(s) (e.g., RRC PDU(s), PDCP PDU(s), or RLC PDU(s)) that include RRC message(s), NAS message(s), IP packet(s), Ethernet packet(s), or application packet(s).

The events 404, 406, 408, 410, 412, 414, 415, 416, and 418 are collectively referred to in Fig. 4 as a small data transmission procedure 492.

In some implementations, the UL RRC message is an existing RRC resume request message (e.g., an *RRCResumeRequest* message, an *RRCResumeRequest1* message, an *RRCConnectionResumeRequest* message, or an *RRCConnectionResumeRequest1* message). In other implementations, the UL RRC message is a new RRC resume request message, similar to the existing RRC resume request message. For example, the new RRC resume request message may be defined in future documentation (e.g., future 3GPP standards documentation). The new RRC resume request message may be a format similar to an existing RRC resume request message. In the case of the downlink SDT, the UL RRC message includes an SDT indication, which can be a field or information element (IE) (e.g., *resumeCause* or *ResumeCause).* In some implementations, the UL RRC message is a common control channel (CCCH) message.

In some implementations, after the UE 102 transmits 404 the UL MAC PDU or communicates 418 the subsequent UL data and/or DL data with the DU 174, the CU-CP 172A determines to stop the SDT for the UE 102 based on data inactivity of the UE 102 (i.e., the UE 102 in the inactive state has no data activity with the base station 104). After the UE 102 transmits 404 the UL MAC PDU or communicates 418 the subsequent UL data and/or DL data with the DU 174, the UE 102 in the inactive state determines or detects data inactivity and transmits 420, to the DU 174, UE assistance information (e.g., a *UEAssistanceInformation* message) indicating that the UE 102 prefers or requests to stop the SDT.

The events 420, 421, 422, 423, 424, 426, 428, 430, 432, and 434 are collectively referred to in Fig. 4 as an SDT complete procedure 494, similar to the procedure 394. Examples and implementations for events 320, 321, 322, 323, 324, 326, 328, 330, 332, 334 apply to events 420, 421, 422, 423, 424, 426, 428, 430, 432, 434, respectively. Depending on the implementation, after stopping the SDT, the UE 102 performs 493 another small data transmission procedure with the base station 104, similar to the procedure 492. In further implementations, after completing the procedure 493, the UE 102 performs 495 an SDT complete procedure with the base station 104, similar to the procedure 494.

During an SDT session (i.e., events 492 and 494), the UE 102 monitors a PDCCH using a C-RNTI to receive a DCI. In some implementations, the UE 102 receives the C-RNTI in the random access procedure described for the event 404. In other implementations, the UE 102 receives and retains the C-RNTI as described for Fig. 3. In response to or after receiving 434 the RRC release message, the UE 102 ends the SDT session and stops using the C-RNTI to monitor a PDCCH. Depending on the implementation, the UE 102 retains the C-RNTI after receiving 434 the RRC release message or transitioning 436 to the inactive state from the connected state. In some cases where the RRC release message 434 configures CG-SDT, the UE 102 retains the C-RNTI. In further cases where the RRC release message 434 releases or does not configure CG-SDT, the UE 102 releases the C-RNTI.

After the UE 102 ends the SDT session, the UE 102 in the inactive state monitors a PDCCH using a paging RNTI (P-RNTI). In some scenarios or implementations, the CU-CP 172A determines to page the UE 102 to receive a mobile-terminated call or data. In response to the determination, the CU-CP 172A sends a CU-to-DU message (e.g., Paging message) to the DU 174 to request the DU 174 to page the UE 102. In response to the CU-to-DU message, the DU 174 generates a paging message, a DCI to schedule a PDSCH transmission including the paging message, and a CRC of the DCI; scrambles the CRC with the P-RNTI to obtain a scrambled C-RNTI; and transmits the DCI and scrambled CRC on a PDCCH that the UE 102 monitors. The UE 102 receives the DCI and the scrambled CRC on the PDCCH and verifies the scrambled CRC with the P-RNTI. In cases where the UE 102 verifies that the scrambled CRC is valid, the UE 102 receives and decodes the PDSCH transmission in accordance with the DCI. The UE 102 subsequently retrieves the paging message from the PDSCH transmission.

In some implementations, the second SDT CU configuration is the same as the first SDT CU configuration. In other implementations, the second SDT CU configuration is different from the first SDT CU configuration. Depending on the implementation, the UE 102 updates (e.g., replaces or modifies) the first SDT CU configuration with the second SDT CU configuration. In some implementations, the CU-CP 172A includes an indication in the RRC release message to indicate to the UE 102 to update the first SDT CU configuration with the second SDT CU configuration. In some such implementations, the UE 102 updates the first SDT CU configuration with the second SDT CU configuration in response to the indication.

In other implementations, the CU-CP 172A includes a modification indication in the RRC release message to indicate to the UE 102 to modify the first SDT CU configuration with the second SDT CU configuration. In some such implementations, the UE 102 modifies the first SDT CU configuration with the second SDT CU configuration in response to the modification indication. In yet other implementations, the CU-CP 172A includes a setup indication in the RRC release message to indicate to the UE 102 to replace the first SDT CU configuration with the second SDT CU configuration. In some such implementations, the UE 102 replaces the first SDT CU configuration with the second SDT CU configuration in response to the setup indication.

In some implementations, the second SDT DU configuration is the same as the first SDT DU configuration. In other implementations, the second SDT DU configuration is different from the first SDT DU configuration. Depending on the implementation, the UE 102 updates (e.g., replaces or modifies) the first SDT DU configuration with the second SDT DU configuration. In some implementations, the DU 174 includes an indication in the second SDT DU configuration to indicate to the UE 102 to update the first SDT DU configuration with the second SDT DU configuration. In some such implementations, the UE 102 updates the first SDT DU configuration with the second SDT DU configuration in response to the indication.

In other implementations, the DU 174 includes a modification indication in the second SDT DU configuration to indicate to the UE 102 to modify the first SDT DU configuration with the second SDT DU configuration. In some such implementations, the UE 102 modifies the first SDT DU configuration with the second SDT DU configuration in response to the modification indication. In yet other implementations, the DU 174 includes a setup indication in the second SDT DU configuration to indicate to the UE 102 to replace the first SDT DU configuration with the second SDT DU configuration. In some such implementations, the UE 102 replaces the first SDT DU configuration with the second SDT DU configuration in response to the setup indication.

In some cases where the CU-CP 172A and/or the DU 174 support delta configuration, the CU-CP 172A does not send 428 the CU-to-DU message to obtain the second SDT DU configuration from the DU 174. In some such implementations, unless a condition for releasing the first SDT configuration is satisfied, the DU 174 retains the first SDT DU configuration. Alternatively, the CU-CP 172A includes the first SDT DU configuration in the second CU-to-DU message to cause the DU 174 to retain the first SDT DU configuration. In some such cases, the CU-CP 172A does not include an SDT DU configuration and/or an SDT CU configuration in the RRC release message to cause the UE 102 to continue using the first SDT CU configuration and/or the first SDU DU configuration. In some implementations, the CU-CP 172A does not include a release indication in the RRC release message in order to configure the UE 102 to continue using the first SDT DU configuration and/or the first SDT CU configuration. The release indication indicates releasing the previously received SDT DU configuration and/or the SDT CU configuration. In cases where the CU-CP 172A includes the release indication in the RRC release message, the UE 102 releases the first SDT CU configuration and/or the first SDT DU configuration in response to the release indication. In some cases where the CU-CP 172A and/or DU 174 do not support delta configuration, the CU-CP 172A includes the SDT DU configuration and/or the SDT CU configuration in the RRC release message as described above.

In some implementations, in response to the third CU-to-DU message, the DU 174 retains the second SDT DU configuration and releases the first non-SDT DU configuration and/or second non-SDT DU configuration. The DU 174 sends a third DU-to-CU message (e.g., a *UE Context Release Complete* message or a *UE Context Modification Response* message) to the CU-CP 172A in response to the third CU-to-DU message. In some implementations, if the RRC release message instructs the UE 102 to transition to the idle state (i.e., RRC_IDLE), the UE 102 releases a non-SDT configuration (e.g., the first non-SDT DU configuration, first non-SDT CU configuration, second non-SDT DU configuration, and/or second non-SDT CU configuration described for Fig. 3) and at least one SDT configuration (e.g., the SDT DU configuration and SDT CU configuration described for Fig. 3).

In some implementations, the CU-CP 172A does not request the DU 174 to provide an SDT DU configuration for causing the UE 102 to transition to the inactive state with SDT configured. In some such cases, the events 428 and 430 are omitted. In such cases, the CU-CP 172A does not include an SDT DU configuration in the RRC release message. Alternatively, the CU-CP 172A generates the SDT DU configuration alone and includes the SDT DU configuration in the RRC release message.

In some implementations, the DU 174 does not include an SDT DU configuration in the second DU-to-CU message, similar to the process as described above with regard to Fig. 3. Further, the DU 174 does not include a configuration for CG-SDT in the SDT DU configuration in the second DU-to-CU message, also similar to the process as described above with regard to Fig. 3.

In some implementations where the UE 102 supports CG-SDT and/or the DU 174 supports CG-SDT, the CU-CP 172A requests the DU 174 to provide an SDT DU configuration, as described above. In cases where the UE 102 does not support CG-SDT or the DU 174 does not support CG-SDT, the CU-CP 172A does not request the DU 174 to provide an SDT DU configuration. Depending on the implementation, the CU-CP 172A receives a UE capability (e.g., *UE-EUTRA-Capability* IE, *UE-NR-Capability* IE, or *UE-6G-Capability* IE) of the UE 102 from the UE 102, the CN 110 (e.g., MME 114 or AMF 164), or the base station 106. Depending on the implementation, the CU-CP 172A receives the UE capability before the UE 102 initiates the SDT, while the UE 102 operates 402 in the inactive state, while the UE 102 performs the SDT (e.g., in the UE Context Setup Request message of the event 408 or the CU-to-DU message of the event 428), or while the UE 102 operates in the connected state as described for Fig. 3. The UE capability indicates whether the UE 102 supports CG-SDT. Thus, the CU-CP 172A can determine whether the UE 102 supports CG-SDT in accordance with the UE capability. In some implementations, the CU-CP 172A receives, from the DU 174, a DU-to-CU message indicating whether the DU 174 supports CG-SDT. The DU-to-CU message can be the second DU-to-CU message, the message of the event 308 or 316, or a non-UE associated message (e.g., a non-UE associated F1AP message as defined in 3GPP specification 38.473).

In some implementations, the DU 174 determines whether to provide an SDT DU configuration for the UE 102 to the CU-CP 172A, depending on whether the UE 102 or the DU 174 supports CG-SDT or not, similar to Fig. 3 above. Further, the DU 174 can determine and signal whether the UE 102 supports CG-SDT, similar to Fig. 3 above.

Referring now to Fig. 5A, a scenario 500A depicts small data transmission, similar to Fig. 4. However, Fig. 5A further depicts the process of transitioning from the inactive state with SDT to the connected state with non-SDT (e.g., according to a UE context request and RRC resume message). In the scenario 500A, the base station 104 includes a CU 172 and a DU 174. The CU 172 includes a CU-CP 172A and a CU-UP 172B. In the scenario 500A, the UE 102 initially operates 502 in an inactive state with SDT configured, similar to the event 402. The UE 102 then performs 592 a small data communication procedure with the base station 104, similar to the event 492.

During the small data communication procedure 592, the CU-CP 172A can determine whether to cause the UE 102 to transition to a connected state (e.g., based on UL or DL data activity of the UE 102). In some implementations, the UE 102 transmits 503, to the DU 174, a non-SDT indication message to indicate that UL data is available or request to transition to the connected state. In some implementations, the UE 102 transmits 503, to the DU 174, the non-SDT indication message on radio resources configured in a CG configuration for SDT (or CG-SDT configuration). In other implementations, the UE 102 receives an uplink grant on a PDCCH from the DU 174 using a C-RNTI and transmits 503 to the DU 174 the non-SDT indication message on radio resources configured in the uplink grant. In turn, the DU 174 transmits 505 a *UL RRC Message Transfer* message including the non-SDT indication message to the CU-CP 172A. The CU-CP 172A can determine to cause the UE 102 to transition to the connected state in response to or based on the non-SDT indication message. In other implementations, the CU-UP 172B receives DL data from the CN 110 and transmits 507 a DL data notification (e.g., *DL Data Notification* message) to the CU-CP 172A to indicate that DL data is available for transmission in response to receiving the DL data. The CU-CP 172A determines to cause the UE 102 to transition to the connected state in response to or based on the DL data notification. In other implementations, the CU-CP 172A determines to cause the UE 102 to transition to the connected state based on measurement results received from the UE 102. In yet other implementations, the CU-CP 172A receives DL data (e.g., NAS message(s)) from the CN 110 and determines to cause the UE 102 to transition to the connected state in response to receiving the DL data.

In some implementations, the UL data and DL data are associated with radio bearer(s) (e.g., SRB(s) and/or DRB(s)) of the UE 102. For example, the UL data includes RRC message(s) or NAS message(s) associated with SRB(s) of the UE 102. In another example, the UL data includes IP packet(s) associated with DRB(s) of the UE 102. In some implementations, the DRB(s) are SDT DRB(s). In other implementations, the DRB(s) are non-SDT DRB(s). In some implementations, the UE 102 includes ID(s) of the radio bearer(s) in the non-SDT indication message. Thus, the CU-CP 172A can determine whether to cause the UE 102 to transition to the connected state based on the ID(s). For example, if the radio bearer(s) identified by the ID(s) do not qualify for SDT, the CU-CP 172A determines to cause the UE 102 to transition to the connected state. Otherwise, the CU-CP 172A determines not to cause the UE 102 to transition to the connected state. In some implementations, the UE 102 includes data volume information of the UL data in the non-SDT indication message. Thus, the CU-CP 172A can determine whether to cause the UE 102 to transition to the connected state based on the data volume information.

In some implementations, the data volume information includes a total data volume of the UL data, which can be quantized or rounded to a value that is indicated in the data volume information. In other implementations, the data volume information includes a data volume for each of the radio bearer(s), which is quantized or rounded to a value that can be indicated in the data volume information. For example, if the total data volume is above a predetermined threshold, the CU-CP 172A determines to cause the UE 102 to transition to the connected state. Otherwise, the CU-CP 172A determines not to cause the UE 102 to transition to the connected state. In another example, if the data volume for a particular radio bearer is above a predetermined threshold, the CU-CP 172A determines to cause the UE 102 to transition to the connected state. Otherwise, the CU-CP 172A determines not to cause the UE 102 to transition to the connected state. In yet another example, if the total data volume is above a predetermined threshold and the data volume for a particular radio bearer is above another predetermined threshold, the CU-CP 172A determines to cause the UE 102 to transition to the connected state. Otherwise, the CU-CP 172A determines not to cause the UE 102 to transition to the connected state.

In response to or after determining to cause the UE 102 to transition to the connected state, the CU-CP 172A transmits 508 a UE Context Request message (e.g., a *UE Context Setup Request* message or a *UE Context Modification Request* message) to the DU 174. In response, the DU 174 transmits 510 a UE Context Response message (e.g., a *UE Context Setup Response* message or a *UE Context Modification Response* message) to the CU-CP 172A. In some implementations, the DU 174 includes a non-SDT DU configuration (i.e., a first non-SDT DU configuration) in the UE Context Response message. After receiving 510 the UE Context Response message, the CU-CP 172A transmits 545 a CU-to-DU message including an RRC resume message (e.g., an *RRCResume* message or an *RRCConnectionResume* message) to the DU 174. In turn, the DU 174 transmits 546 the RRC resume message to the UE 102. In some implementations, the DU 174 transmits 546 one or more PDUs including the RRC resume message to the UE 102. The PDU(s) can be MAC PDU(s) or RLC PDU(s). In some implementations, the CU-to-DU message is *a DL RRC Message Transfer* message or a *UE Context Modification Request* message. In some implementations including the *UE Context Modification Request* message, the DU 174 transmits a *UE Context Modification Response* message to the CU-CP 172A in response. In response to the RRC resume message, the UE 102 transitions 548 to the connected state and transmits 550 an RRC resume complete message (e.g., an *RRCResumeComplete* message or an *RRCConnectionResumeComplete* message) to the DU 174. In cases where the UE Context Response message includes the non-SDT DU configuration, the CU-CP 172A includes the non-SDT DU configuration in the RRC resume message. The DU 174 transmits 552 a DU-to-CU message including the RRC resume complete message to the CU-CP 172A. In some implementations, the DU-to-CU message can be a *UL RRC Message Transfer* message, a *UE Context Modification Required* message or a *UE Context Modification Response* message.

After determining to cause the UE 102 to transition to the connected state, the CU-CP 172A can transmit a 554 Bearer Context Request message (e.g., a *Bearer Context Setup Request* message or a *Bearer Context Modification Request* message) to the CU-UP 172B to indicate to the CU-UP 172B to resume radio bearer(s) (e.g., SDT DRB(s) and/or non-SDT DRB(s)) of the UE 102, if suspended. In response, the CU-UP 172B resumes the radio bearer(s) for the UE 102 and transmits 556 a Bearer Context Response message (e.g., a *Bearer Context Setup Response* message or a *Bearer Context Modification Response* message) to the CU CP-172A. The events 554 and 556 can be grouped as a Bearer Context procedure (e.g., a Bearer Context Setup procedure or a Bearer Context Modification procedure).

In some implementations, the CU-CP 172A transmits 554 the Bearer Context Request message after transmitting 508 the UE Context Request message, receiving 510 the UE Context Response message, transmitting 545 the CU-to-DU message, or receiving 552 the DU-to-CU message. In cases where the CU-CP 172A determines no radio bearer(s) of the UE 102 are suspended when determining to cause the UE 102 to transition to the connected state, the CU-CP 172A does not transmit the Bearer Context Request message 554 to the CU-UP 172B. In some implementations, the CU-CP 172A transmits 545 the CU-to-DU message before or after transmitting 554 the Bearer Context Request message or receiving 556 the Bearer Context Response message.

In some implementations, the CU-CP 172A includes an indication to the DU 174 to generate a non-SDT configuration in the UE Context Request message, and the DU 174 includes the first non-SDT DU configuration in the UE Context Response message in response to the indication. In yet other implementations, the CU-CP 172A stores a non-SDT DU configuration (i.e., a second non-SDT DU configuration) that a DU (e.g., the DU 174 or another DU or base station) used to communicate with the UE 102. The UE 102 can also store the second non-SDT DU configuration. In some such cases, the CU-CP 172A includes the second non-SDT DU configuration in the UE Context Request message, and the DU 174 includes the first non-SDT DU configuration in the UE Context Response message in response to receiving the second non-SDT DU configuration. In some implementations, the first non-SDT DU configuration augments or replaces the second non-SDT DU configuration. Examples and implementations for the first and second non-SDT DU configurations are similar to the non-SDT DU configurations described above. In some implementations, the DU 174 transmits an additional DU-to-CU message (e.g., a *UE Context Modification Required* message) including the first non-SDT DU configuration to the CU-CP 172A instead of including the first non-SDT DU configuration in the UE Context Response message.

After transitioning to the connected state, the UE 102 communicates 518 UL data and/or DL data with the CU-CP 172A and/or CU-UP 172B via the DU 174. Depending on the implementation, the UL data includes the UL data triggering the UE to transmit the non-SDT indication message. In further implementations, the UL data also includes new UL data available for transmission. In some implementations, the UL data includes or is PDCP PDU(s), RRC PDU(s), NAS PDU(s), or an LTE positioning protocol (LPP) PDU(s). The UL data can be associated with an SRB (e.g., SRB1 or SRB2). In some implementations, the UE 102 applies one or more security functions (e.g., encryption and/or integrity protection) to the UL data as described above. The CU-CP 172A applies one or more security functions (e.g., decryption and/or integrity protection check) to the UL data as described above. The UL data includes or is PDCP PDU(s), SDAP PDU(s), IP packet(s), or Ethernet packet(s). In some implementations, the UL data is associated with DRB(s) (e.g., SDT DRB(s) and/or non-SDT DRB(s)). In further implementations, the UE 102 applies one or more security functions (e.g., encryption and/or integrity protection) to the UL data as described above. The CU-UP 172B applies one or more security functions (e.g., decryption and/or integrity protection check) to the UL data as described above.

In some implementations, the DL data includes the DL data received from the CN 110 as described above. In further implementations, the DL data also includes new DL data that the CU-CP 172A and/or CU-UP 172B receives from the CN 110. The DL data can be or include DL data packet(s) such as NAS PDU(s), IP packet(s), or Ethernet packet(s). In the case of the NAS PDU(s), the CU-CP 172A receives the NAS PDU(s) from the CN 110 (e.g., AMF 164) and generates RRC PDU(s) each including a particular NAS PDU of the NAS PDU(s). In some implementations, the CU-CP 172A applies one or more security functions (e.g., encryption and/or integrity protection) to the RRC PDU(s) as described above. The UE 102 applies one or more security functions (e.g., decryption and/or integrity protection check) to the RRC PDU(s) as described above. In the case of the NAS PDU(s), the CU-CP 172A receives the NAS PDU(s) from the CN 110 (e.g., AMF 164) and generates RRC PDU(s) each including a particular NAS PDU of the NAS PDU(s). In some implementations, the CU-CP 172A applies one or more security functions (e.g., encryption and/or integrity protection) to the RRC PDU(s) as described above. The UE 102 applies one or more security functions (e.g., decryption and/or integrity protection check) to the RRC PDU(s) as described above. In the case of the IP packet(s) or Ethernet packet(s), the CU-UP 172B receives the DL data packet(s) from the CN 110 (e.g., UPF 162) or an edge server and generates PDCP PDU(s) each including a particular DL data packet of the DL data packet(s). In some implementations, the CU-UP 172B applies one or more security functions (e.g., encryption and/or integrity protection) to the DL data packet(s) as described above. The UE 102 similarly applies one or more security functions (e.g., decryption and/or integrity protection check) to the DL data packet(s) as described above.

In cases where the RRC resume message includes the first non-SDT DU configuration, the UE 102 communicates 518 with the DU 174 using the first non-SDT DU configuration. In some cases where the second non-SDT DU configuration is not completely replaced by the first non-SDT DU configuration (i.e., the UE 102 does not release the second non-SDT DU configuration in response to the RRC resume message), the UE 102 communicates 518 with the DU 174 using the configuration parameters in the second non-SDT DU configuration, which are not augmented by the first non-SDT DU configuration.

In some implementations, the DU 174 does not provide the first non-SDT DU configuration to the CU-CP 172A in the UE Context Response message and the additional DU-to-CU message. In such cases, the RRC resume message does not include the first non-SDT configuration, and the UE 102 and the DU 174 communicate 518 with one another using the second non-SDT DU configuration.

In some implementations, the UE 102 releases the SDT configuration(s) (e.g., the SDT CU configuration, the SDT DU configuration and/or the CG-SDT configuration(s) in response to the RRC resume message or transitioning to the connected state. In some implementations, the base station 104 (e.g., the CU-CP 172A and/or DU 174) releases the SDT configuration(s) in response to or after causing the UE 102 to transition to the connected state, receiving 510 the CU-to-DU message, or transmitting 545, 546 the RRC resume message. In other implementations, the base station 104 releases the SDT configuration(s) in response to or after receiving an acknowledgement (e.g., an RLC acknowledgement or a HARQ acknowledgement) for the PDU(s) including the RRC resume message. In yet other implementations, the base station 104 (e.g., the CU-CP 172A and/or DU 174) releases the SDT configuration(s) in response to or after communicating 508 the UE Context Request message or 510 the UE Context Response message.

In other implementations, the UE 102 retains the SDT configuration(s) (e.g., the SDT CU configuration, the SDT DU configuration, and/or the CG-SDT configuration(s)) in response to or after receiving the RRC resume message or transitioning to the connected state. In some implementations, the UE 102 refrains from using the SDT configuration(s) to communicate (e.g., 550 the RRC resume complete message and/or 518 data) with the base station 104, while operating in the connected state. In other implementations, the UE 102 uses the SDT configuration(s) to communicate (e.g., 550 the RRC resume complete message and/or 518 data) with the base station 104, while operating in the connected state. In some implementations, the base station 104 retains the SDT configuration(s) in response to or after transitioning the UE 102 to the connected state or transmitting the RRC resume message. In some implementations, the base station 104 refrains from using the SDT configuration(s) to communicate (e.g., 550 the RRC resume complete message and/or 518 data) with the UE 102 operating in the connected state. In other implementations, the base station 104 uses the SDT configuration(s) to communicate (e.g., 550 the RRC resume complete message and/or 518 data) with the UE 102 operating in the connected state.

In some implementations, the UE 102 discards a UE Inactive AS Context in response to or after transitioning the UE 102 to the connected state or transmitting the RRC resume message. In some implementations, the UE 102 releases one or more configuration parameters in a suspend configuration (e.g., suspendConfig) except RAN notification area information (e.g., ran-NotificationAreaInfo). The UE 102 can receive the suspend configuration in an RRC release message from the base station 104, similar to event 334 or 434, before performing 592 the procedure.

In some implementations, the non-SDT indication message is an RRC message (e.g., a *UEAssistanceInformation* message or a new RRC message). In some such implementations, the UE 102 continues to perform small data communication with the base station 104 after transmitting the non-SDT indication message. In further implementations, the UE 102 transmits a UL MAC PDU including the non-SDT indication message to the CU-CP 172A via the DU 174. In some implementations, the UE 102 can include data in the UL MAC PDU in addition to the non-SDT indication message. In other implementations, the UE 102 refrains from including data in the UL MAC PDU. In some implementations, the UE 102 transmits the non-SDT indication message to the CU-CP 172A via the DU 174 and SRB1. In some such implementations, the UE 102 refrains from re-establishing a UE PDCP entity for the SRB1 in response to determining to transmit the non-SDT indication message.

The UE 102 generates a UL PDCP PDU including the non-SDT indication message using the UE PDCP entity and transmits 503, 505 the UL PDCP PDU to the CU-CP 172A via the DU 174. Then, the UE 102 uses the UE PDCP entity to receive 546 a DL PDCP PDU including the RRC resume message without re-establishing the UE PDCP entity. The CU-CP 172A uses a CU-CP PDCP entity to receive the 505 the UL PDCP PDU. The CU-CP 172A refrains from re-establishing the CU-CP PDCP entity for the SRB1 in response to the receiving the non-SDT indication message. The CU-CP 172A generates the DL PDCP PDU using the CU-CP PDCP entity and transmits 545, 546 the DL PDCP PDU to the UE 102 via the DU 174 and SRB1. The UE 102 generates a UL PDCP PDU including the RRC resume complete message using the UE PDCP entity and transmits 550, 552 the UL PDCP PDU to the CU-CP 172A via the DU 174 and SRB1. The CU-CP 172A receives 550, 552 the UL PDCP PDU from the UE 102 via the DU 174, using the CU-CP PDCP entity. In some such implementations, the UE 102 and the CU-CP 172A communicate the PDCP PDUs via the SRB1 without re-establishing the UE PDCP entity and/or CU-CP PDCP entity.

In other implementations, the non-SDT indication message can be an RRC resume request message (e.g., *RRCResumeRequest* message or *RRCResumeConnectionRequest* message). In such implementations, the UE 102 can stop 592 small data communication with the base station 104 to transmit the non-SDT indication message. In some implementations, the UE 102 transmits the non-SDT indication message to the CU-CP 172A via the DU 174 and SRB0. In further implementations, the UE 102 re-establishes the UE PDCP entity in response to determining to transmit the non-SDT indication. After re-establishing the UE PDCP entity, the UE 102 receives 546 the DL PDCP PDU using the UE PDCP entity from the DU 174. Similarly, the CU-CP 172A re-establishes the CU-CP PDCP entity upon receiving the non-SDT indication message. After re-establishing the CU-CP PDCP entity, the CU-CP 172A generates the DL PDCP PDU using the CU-CP PDCP entity and transmits 545, 546 the DL PDCP PDU to the UE 102 via the DU 174 and SRB1. After re-establishing the UE PDCP entity, the UE 102 generates a UL PDCP PDU including the RRC resume complete message using the UE PDCP entity and transmits 550, 552 the UL PDCP PDU to the CU-CP 172A via the DU 174 and SRB1. After re-establishing the CU-CP PDCP entity, the CU-CP 172A receives 550, 552 the UL PDCP PDU from the UE 102 via the DU 174, using the CU-CP PDCP entity.

Before performing 592 the small data communication procedure, the UE 102 operating 502 in the inactive state starts or restarts a first UE CG-SDT timer (e.g., CG-SDT-TAT), as described for Figs. 3 and 4. In some implementations, the UE 102 starts or restarts the first UE CG-SDT timer in response to receiving a timing advance command from the DU 174 during 592 the small data communication procedure. In some implementations, the UE 102 maintains (e.g., keeps running or does not stop, start, or restart) the first UE CG-SDT timer (e.g., CG-SDT-TAT) in response to or after receiving the RRC resume message. In other implementations, the UE 102 stops the first UE CG-SDT timer in response to or after receiving the RRC resume message.

Similarly, depending on the implementation, the DU 174 runs a first DU CG-SDT timer for the UE 102 operating 502 in the inactive state, as described for Figs. 3 and 4. In some implementations, the DU 174 starts or restarts the first DU CG-SDT timer in response to transmitting a timing advance command to the UE 102. In some implementations, the DU 174 maintains (e.g., keeps running or does not stop, start, or restart) the first DU CG-SDT timer in response to or after receiving 508 the UE Context Request message, transmitting 510 the UE Context Response message, or transmitting 512 the resume message. In other implementations, the DU 174 stops the first DU CG-SDT timer in response to or after receiving 508 the UE Context Request message, transmitting 510 the UE Context Response message, or transmitting 545 the RRC resume message. In some implementations in which the first DU CG-SDT timer expires, the DU 174 releases the CG-SDT configuration(s). In other implementations in which the first DU CG-SDT timer expires, the DU 174 retains the CG-SDT configuration(s) and refrains from receiving or attempting to receive UL transmissions (e.g., MAC PDUs) on the CG resources. In some such implementations, the DU 174 releases the CG resources or determines the CG resources as not valid.

In some implementations, the UE 102 in the inactive state runs a second UE CG-SDT timer during 592 the small data communication procedure, as described for the procedure 492. In cases where the second UE CG-SDT timer is running, the UE 102 stops the second UE CG-SDT timer in response to or after receiving 546 the RRC resume message or transitioning 548 to the connected state, in some implementations. Alternatively, the UE 102 maintains the second UE CG-SDT timer in response to or after receiving 546 the RRC resume message or transitioning 548 to the connected state. In some implementations, the UE 102 receives an RRC setup message (e.g., *RRCSetup* message) instead of the RRC resume message. In response to or after receiving the RRC setup message, the UE 102 stops the second UE CG-SDT timer and transmits an RRC setup complete message to the CU-CP 172A via the DU 174.

Similarly, depending on the implementation, the DU 174 runs a second DU CG-SDT timer during 592 the small data communication procedure. In some implementations, the DU 174 starts or restart the second DU CG-SDT timer when or after receiving from the UE 102 a PUSCH transmission on radio resources configured in the CG-SDT configuration. While the second DU CG-SDT timer is running, the DU 174 transmits a PDCCH using the C-RNTI. In cases where the second DU CG-SDT timer is running, the DU 174 stops the second DU CG-SDT timer in response to or after receiving 508 the UE Context Request message, transmitting 510 the UE Context Response message, or transmitting 546 the RRC resume message. In other implementations, the DU 174 maintains the second DU CG-SDT timer in response to or after receiving 508 the UE Context Request message, transmitting 510 the UE Context Response message, or transmitting 546 the RRC resume message. The DU 174 transmits, to the UE 102 operating in the connected state, a DCI on a PDCCH and/or a PDCCH using the C-RNTI irrespective of the second DU CG-SDT timer (e.g., running, expiring, or stopping).

The events 502, 592, 503, 505, 507, 508, 510, 545, 546, 548, 550, 552, 554, 556, and 518 are collectively referred to in Fig. 5A as a state transition procedure 588.

Later in time, the base station 104 can perform 590 a non-SDT configuration procedure and 594 an SDT configuration procedure with the UE 102, similar to the procedure 390 and the procedure 394, respectively. The UE 102 transitions 536 to the inactive state in response to receiving an RRC release message in the procedure 594. After transitioning to the inactive state, the UE 102 in the inactive state can perform 593 a small data communication procedure and perform 595 an SDT complete procedure with the base station 104, similar to the procedures 492 and 494, respectively.

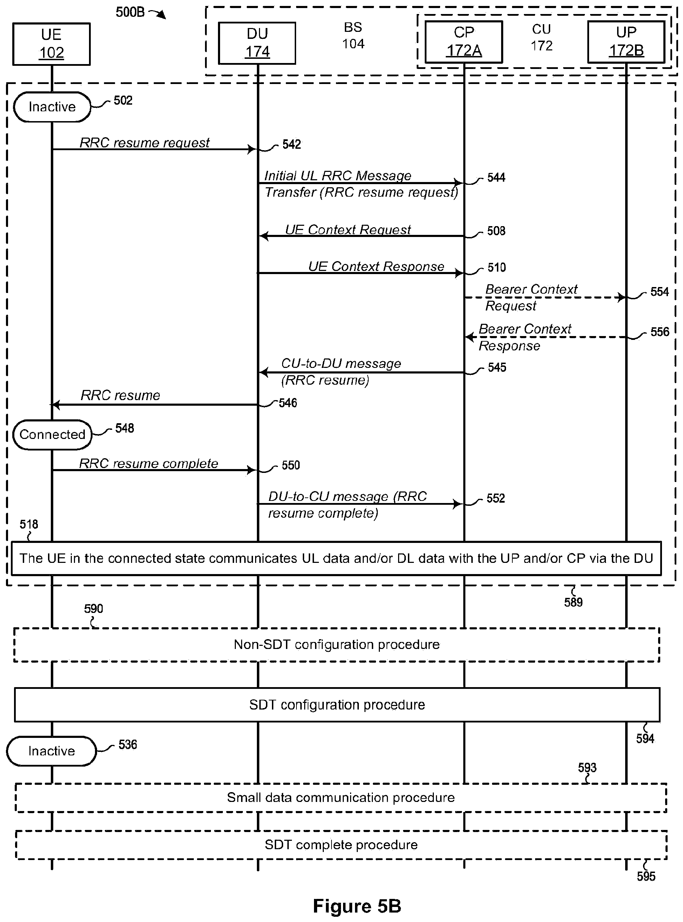

Referring next to Fig. 5B, a scenario 500B is generally similar to the scenario 500A, except that the UE 102 initiates an RRC resume procedure instead of the small data communication procedure (e.g., event 592). The differences between the scenarios 500B and 500A are discussed below.

In response to initiating the RRC resume procedure, the UE 102 in the inactive state transmits 542 an RRC resume request message to the DU 174, which in turn transmits 544 an *Initial UL RRC Message Transfer* message including the RRC resume request message (e.g., an *RRCResumeRequest* message or an *RRCConnectionResumeRequest* message) to the CU-CP 172A. In response to receiving the RRC resume request message, the CU-CP 172A determines to cause the UE 102 to transition to the connected state. In response to or after determining to cause the UE 102 to transition to the connected state, the CU-CP 172A causes the UE 102 to transition to the connected state as described for the scenario 500A.

In some implementations, the UE 102 generates a UL MAC PDU, including the RRC resume request message, and transmits 542 the UL MAC PDU to the DU 174. In some implementations, the UE 102 transmits 542, to the DU 174, the UL MAC PDU on radio resources configured in a CG configuration for SDT. In other implementations, the UE 102 performs a random access procedure to transmit the UL MAC PDU, similar to the event 404.

In some implementations, the UE 102 initiates the RRC resume procedure to transmit non-SDT data (i.e., data not qualifying for SDT). More specifically, an upper protocol layer (e.g., NAS layer) of the UE 102 requests an RRC layer (e.g., RRC 214) of the UE 102 to initiate the RRC resume procedure. In other implementations, the UE 102 receives a paging message from the DU 174 and initiates the RRC resume procedure to respond to the paging message. In some implementations, the RRC layer (e.g., RRC 214) initiates the RRC resume procedure in response to the paging message. In yet other implementations, the UE 102 detects a periodic RAN notification area update (RNAU) timer expires and initiates the RRC resume procedure in response to the periodic RNAU timer expiring. In some implementations, the RRC layer (e.g., RRC 214) starts or restarts the RNAU timer, maintain the RNAU timer running, and initiates the RRC resume procedure in response to the RNAU timer expiring.

The events 502, 542, 544, 508, 510, 545, 546, 548, 550, 552, 554, 556, and 518 are collectively referred to in Fig. 5B as a state transition procedure 589.

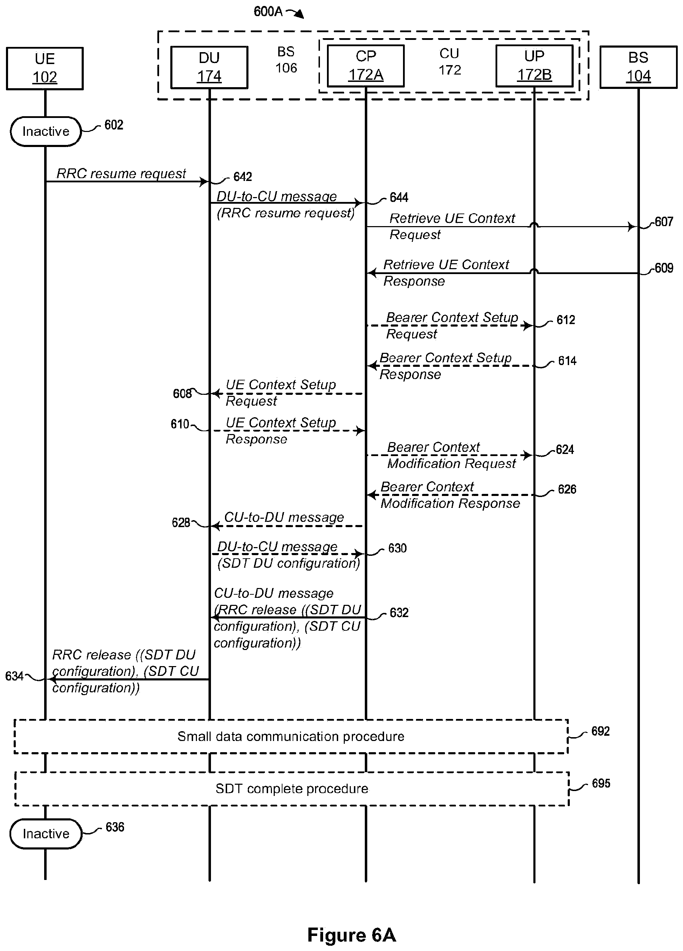

Referring next to Fig. 6A, a scenario 600A depicts an RRC release message responding to an RRC resume request. In particular, unlike Figs. 3-5B, the scenario 600A depicts a request to resume operation at a base station 106 that retrieves a UE context from a base station 104. In the scenario 600A, the base station 106 includes a CU 172 and a DU 174. The CU 172 includes a CU-CP 172A and a CU-UP 172B. The UE 102 initially operates 602 in an inactive state. In some implementations, the UE 102 operates in the connected state with the base station 104 before operating 602 the inactive state and later in time transitions to the inactive state 602, as described for Fig. 3. In other implementations, the UE 102 operates in the inactive state and performs small data transmission with the base station 104, stops the small data transmission with the base station 104, and stays in the inactive state 602, as described for Fig. 4. In some such implementations, the base station 104 configures the UE 102 with SDT configuration parameters (e.g., SDT CU configuration and/or SDT DU configuration), as described for Fig. 3 or Fig. 4. "SDT configuration" is used to represent the SDT configuration parameters to simplify the following description. In some implementations, the SDU configuration includes CG-SDT configuration(s). In some such cases, the UE 102 discards the CG-SDT configuration(s) because the base station 106 does not configure the CG-SDT configuration(s) for the UE 102 (i.e., the CG-SDT configuration(s) is not valid).

Later in time, the UE 102 in the inactive state initiates an RRC resume procedure with the base station 106. In some implementations, the UE 102 initiates the RRC resume procedure for a RAN notification area (RNA) update because the base station 106 belongs to another RNA different from an RNA of another cell. The other cell is a cell where the UE 102 receives an RRC release message configuring the UE 102 to transition to the inactive state 602. In other implementations, the UE 102 performs the RRC resume procedure for a periodic RNA update. In response to the initiation, the UE 102 in the inactive state transmits 642 an RRC resume request message to the DU 174, which in turn transmits 644 an *Initial UL RRC Message Transfer* message including the RRC resume request message (e.g., an *RRCResumeRequest* message or an *RRCConnectionResumeRequest* message) to the CU-CP 172A. In some implementations, the RRC resume request message includes a UE ID for the UE 102. For example, the UE ID can be an I-RNTI (e.g., a *fullI-RNTI* or *shortI-RNTI* value or field). In some implementations, the RRC resume request message includes an RRC MAC-I. In some implementations, the RRC MAC-I is a *resumeMAC-I* field, and the UE 102 obtains the *resumeMAC-I* (e.g., as specified in 3GPP specification 38.331). In other implementations, the UE 102 obtains the RRC MAC-I (e.g., a *resumeMAC-I* field) from the RRC resume request with an integrity key (e.g., K_{RRCint} key), an integrity protection algorithm, and other parameters COUNT (e.g., 32-bit, 64-bit or 128-bit value), BEARER (e.g., 5-bit value), and DIRECTION (e.g., 1-bit value). In some implementations, the UE 102 sets bits for COUNT, BEARER, and DIRECTION to binary ones to generate the RRC MAC-I.

After receiving the RRC resume request message, the CU-CP 172A transmits 607 a *Retrieve UE Context Request* message to a base station 104 to retrieve a UE context of the UE 102. In response, the base station 104 transmits 609 a *Retrieve UE Context Response* message including UE context information of the UE 102 to the CU-CP 172A. In some implementations, the CU-CP 172A includes the RRC MAC-I in the *Retrieve UE Context Request* message. In some implementations, the CU-CP 172A determines a first IP address of the base station 104, a CU-CP of the base station 104, or a CU of the base station 104 in accordance with the UE ID. The CU-CP 172A generates a first IP packet, including a source address (i.e., an IP address of the CU-CP 172A), a destination address (i.e., the first IP address), and the *Retrieve UE Context Request* message. The CU-CP 172A transmits the first IP packet to the base station 104. The base station 104 generates a second IP packet including a source address (i.e., the first IP address or another IP address of the base station 104), a destination address (i.e., the IP address of the CU-CP 172A), and the *Retrieve UE Context Response* message. The base station transmits the second IP packet to the CU-CP 172A.

In some implementations, the UE context information includes security capabilities, security information, a maximum bit rate, a PDU session resources to be setup list, an RRC context, a UE radio capability ID, and/or the SDT configuration. In some implementations, the RRC context includes configuration parameters that the base station 104 configures for the UE 102 operating in the connected state to communicate with the base station 104. For example, the configuration parameters include a cell group configuration (e.g., *CellGroupConfig* IE), a radio bearer configuration (e.g., *RadioBearerConfig* IE), and/or measurement configuration(s) (e.g., *MeasConfig* IE(s)). In some implementations, the base station 104 includes the SDT configuration in the RRC context. In other implementations, the base station 104 refrains from including the SDT configuration in the RRC context or in the *Retrieve UE Context Response* message.

In some cases where the SDT configuration includes CG-SDT configuration(s), the base station 104 excludes the CG-SDT configuration(s) from the SDT configuration. Alternatively, the base station 104 still includes the CG-SDT configuration(s) in the SDT configuration. In some implementations, when the CU-CP 172A receives the CG-SDT configuration(s), the CU-CP 172A discards the CG-SDT configuration(s). In further implementations, the CU-CP 172A discards the SDT configuration, such as in cases where the CU-CP 172A does not support delta configuration. In other implementations, the base station 104 refrains from including the SDT configuration in the *Retrieve UE Context Response* message.

Depending on the implementation, after receiving 609 the *Retrieve UE Context Response* message, the CU-CP 172A transmits 612 a *Bearer Context Setup Request* message to the CU-UP 172B to request the CU-UP 172B to establish bearer context(s) for SDT DRB(s) configured in the SDT configuration for the UE 102. In response, the CU-UP 172B establishes (i.e., sets up) bearer context(s) for the SDT DRB(s) and transmits 614 a *Bearer Context Setup Response* message to the CU-CP 172A to confirm that that bearer context(s) for the SDT DRB(s) are established. In some implementations in which non-SDT DRB(s) of the UE 102 exist, the CU-CP 172A requests the CU-UP 172B to establish bearer context(s) for the non-SDT DRB(s) in the *Bearer Context Setup Request* message 612. In such a case, the CU-UP 172B establishes bearer context(s) for the non-SDT DRB(s) in response to the *Bearer Context Setup Request* message 612. In some implementations, the CU-UP 172B includes transport layer information of the CU-UP 172B in the *Bearer Context Setup Response* message. The transport layer information of the CU-UP 172B configures and/or includes IP address(es) and/or uplink TEID(s) associated with the SDT DRB(s) and/or non-SDT DRB(s). In some implementations, each of the SDT DRB(s) and non-SDT DRB(s) is associated with a particular IP address and/or a particular uplink TEID, which can identify a GTP tunnel. The *Bearer Context Setup Request* message and *Bearer Context Setup Response* message can be grouped as a Bearer Context Setup procedure.

Depending on the implementation, after receiving 609 the *Retrieve UE Context Response* message or receiving 614 the *Bearer Context Setup Response* message, the CU-CP 172A transmits 608 a *UE Context Setup Request* message to the DU 174 to request the DU 174 to establish a UE context for the UE 102. In response, the DU 174 establishes a UE context for the UE 102 and transmits 610 a *UE Context Setup Response message* to the CU-CP 172A. In some implementations, the CU-CP 172A includes the transport layer information of the CU-UP 172B in the *UE Context Setup Request* message. In some implementations, the DU 174 includes transport layer information of the DU 174 in the *UE Context Setup Response* message. The *UE Context Setup Request* message and *UE Context Setup Response* message can be grouped as a UE Context Setup procedure. The transport layer information of the DU 174 configures and/or includes IP address(es) and/or downlink TEID(s) associated with the SDT DRB(s) and/or non-SDT DRB(s). In some implementations, each of the SDT DRB(s) and non-SDT DRB(s) is associated with a particular IP address and/or a particular downlink TEID, which can identify a GTP tunnel.

Depending on the implementation, after receiving 614 *Bearer Context Setup Response* message or receiving 610 the *UE Context Setup Response* message, the CU-CP 172A transmits 624 a *Bearer Context Modification Request* message to the CU-UP 172B. In response, the CU-UP 172B transmits 626 a *Bearer Context Modification Response* message to the CU-CP 172A. In some implementations, the CU-CP 172A includes the transport layer information of the DU 174 in the *Bearer Context Modification Request* message. The *Bearer Context Modification Request* message and *Bearer Context Modification Response* message can be grouped as a Bearer Context Modification procedure.

In some implementations, the CU-CP 172A includes a suspend indication (e.g., *Bearer Context Status Change* IE with a *"Suspend"* value) in the *Bearer Context Setup Request* message to indicate to the CU-UP 172B to suspend the one or more bearer contexts. Alternatively, the CU-CP 172A includes the suspend indication in the *Bearer Context Modification Request* message instead of including the suspend indication in the *Bearer Context Setup Request* message. In response to the suspend indication, the CU-UP 172B suspends all of the DRB(s) (i.e., the SDT DRB(s) and/or the non-SDT DRB(s)) of the UE 102. In some implementations, when the CU-UP 172B suspends the DRB(s), the CU-UP 172B suspends the bearer contexts of the DRB(s) and/or data communication for the DRB(s).

Depending on the implementation, after receiving 609 the *Retrieve UE Context Response* message, 610 the *UE Context Setup Response* message, 614 the *Bearer Context Setup Response* message, or 626 the *Bearer Context Modification Response* message, the CU-CP 172A determines to obtain an SDT DU configuration from the DU 174. In response to the determination, the CU-CP 172A transmits 628 a CU-to-DU message to the DU 174 to obtain an SDT DU configuration, similar to the events 328, 428. In response, the DU 174 transmits 630 a DU-to-CU message including an SDT DU configuration to the CU-CP 172A, similar to the events 330, 430. After receiving 609 the *Retrieve UE Context Response* message, 610 the *UE Context Setup Response* message, 614 the *Bearer Context Setup Response* message, 626 the *Bearer Context Modification Response* message, or receiving 630 the DU-to-CU message, the CU-CP 172A transmits 632, 634 an RRC release message to the UE 102 via the DU 174, similar to the events 332, 334, 432, and 434. The UE 102 determines that the RRC resume procedure successfully completes upon receiving 634 the RRC release message and stays in the inactive state.

Depending on the implementation, after receiving 634 the RRC release message, the UE 102 performs 692 a small data communication procedure and 695 an SDT complete procedure with the base station 106, similar to the events 492 and 494, respectively. In some implementations, the events 608, 610, 612, 614, 624, and/or 626 occur during the small data communication procedure 692.

In some scenarios or implementations, the CU-UP 172B receives a DL data packet for the UE 102 from a CN (e.g., UPF 162) or an edge server, and the DL data packet is associated with one of the SDT DRB(s). Because the CU-UP 172B suspends the SDT DRB, the CU-UP 172B suspends transmitting the DL data packet to the DU 174 and transmits, to the CU-CP 172A, a UP-to-CP message (e.g., *DL Data Notification* message) to notify the CU-CP 172A that the SDT DRB has data. In some implementations, the CU-UP 172B includes, in the UP-to-CP message, a PDU session ID and/or a QoS flow ID with which the SDT DRB is associated. In response to or after receiving the UP-to-CP message, the CU-CP 172A transmits a CU-to-DU message (e.g., a F1AP Paging message) to the DU 174 to cause or command the DU 174 to transmit to a paging message (e.g., an RRC Paging message) to the UE 102. In response to the CU-to-DU message, the DU 174 transmits a paging message to the UE 102.

In some scenarios or implementations, the CU-UP 172B receives a DL data packet for the UE 102 from a CN (e.g., UPF 162) or an edge server, and the DL data packet is associated with one of the non-SDT DRB(s). Because the CU-UP 172B suspends the non-SDT DRB, the CU-UP 172B suspends transmitting the DL data packet to the DU 174 and transmits, to the CU-CP 172A, a UP-to-CP message (e.g., *DL Data Notification* message) to notify the CU-CP 172A that the non-SDT DRB has data. In some implementations, the CU-UP 172B includes, in the UP-to-CP message, a PDU session ID and/or a QoS flow ID with which the non-SDT DRB is associated. In response to or after receiving the UP-to-CP message, the CU-CP 172A transmits a CU-to-DU message (e.g., a F1AP Paging message) to the DU 174 to cause or command the DU 174 to transmit to a paging message (e.g., an RRC Paging message) to the UE 102. In response to the CU-to-DU message, the DU 174 transmits a paging message to the UE 102.

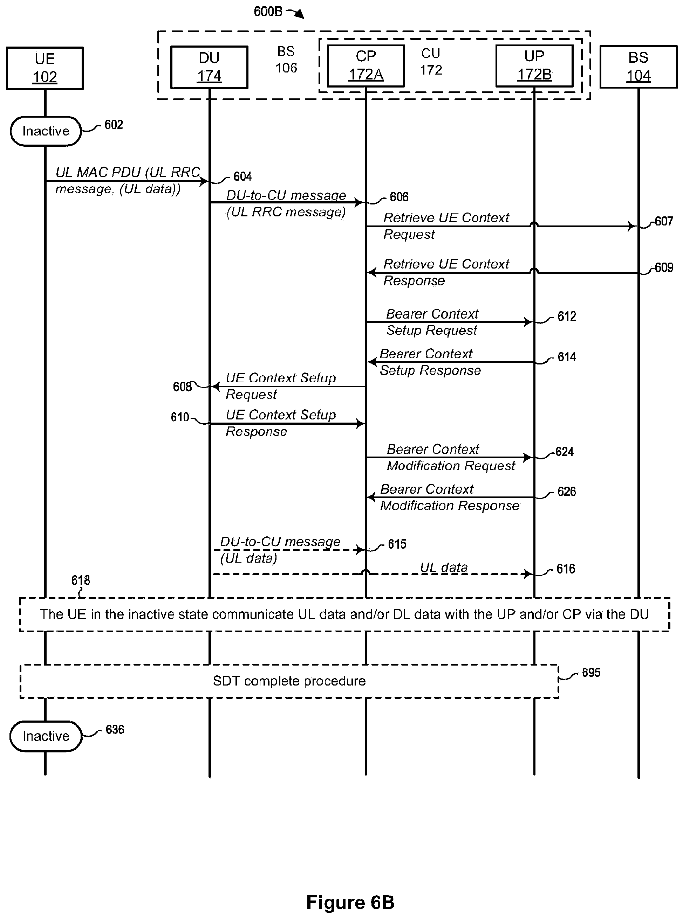

Referring next to Fig. 6B, a scenario 600B depicts small data transmission, similar to the scenarios 400 and 600A, but in which the DU 174 communicates uplink data received from the UE 102 to the CU 172. Events 602, 604, 606, 608, 610, 612, 614, 615, 616, 618, 695, and 636 are similar to events 402, 404, 406, 408, 410, 412, 414, 415, 416, 418, 494, and 436, respectively. Examples and implementations for Fig. 4 and Fig. 6A can apply to Fig. 6B. The differences among Fig. 4, Fig. 6A, and Fig. 6B are described below.

In the scenario 600B, the UE 102 initially operates 602 in an inactive state and is configured with an SDT configuration. In some implementations, the UE 102 receives the SDT configuration as described for Figs. 3, 4, 5A, and/or 5B. The UE 102 operating 602 in the inactive state initiates SDT. In response to the initiation, the UE 102 transmits 604 an UL MAC PDU including an UL RRC message to the DU 174. In turn, the DU 174 transmits 606 a DU-to-CU message including the UL RRC message to the CU-CP 172A. In response to or after receiving 606 the UL RRC message, the CU-CP 172A transmits 607 the *Retrieve UE Context Request* message to the base station 104. In response, the base station 104 transmits 609 the *Retrieve UE Context Response* message to the CU-CP 172A.

In some cases where the UE 102 includes UL data in the initial UL MAC PDU 604, the DU 174 transmits 615 a DU-to-CU message including the UL data to the CU-CP 172A or transmits 616 the UL data, similar to the events 415 or 416, respectively.

Depending on the implementation, after transmitting 604 the initial UL MAC PDU, the UE 102 in the inactive state transmits 618 subsequent UL data to the CU-CP 172A and/or CU-U 172B via the DU 174, similar to the event 418. In some such implementations, after transmitting 604 the initial UL MAC PDU, the UE 102 in the inactive state receives 618 DL data from CU-CP 172A and/or CU-U 172B via the DU 174, similar to the event 418. In some implementations, after the events 604 and/or 618, the UE 102 and base station 106 performs 694 an SDT complete procedure, similar to the event 494. The UE 102 remains 636 in the inactive state in response to or after performing 694 the SDT complete procedure.

In some implementations, the CU-CP 172A refrains from including a suspend indication (e.g., *Bearer Context Status Change* IE with a *"Suspend"* value) in the *Bearer Context Setup Request* message 612. In some implementations, the CU-CP 172A includes, in the *Bearer Context Setup Request* message 612, a resume indication (e.g., *Bearer Context Status Change* IE with a *"ResumeforSDT"* value) indicating to the CU-UP 172B to suspend the non-SDT DRB(s). In response to the resume indication, the CU-UP 172B suspends the non-SDT DRB(s). In other implementations, the CU-CP 172A refrains from including the resume indication in the *Bearer Context Setup Request* message 612. In some such implementations, the CU-CP 172A includes a resume indication (e.g., *Bearer Context Status Change* IE with a *"ResumeforSDT"* value) in the *Bearer Context Modification Request* message 624 to indicate to the CU-UP 172B to suspend the non-SDT DRB(s). In response to the resume indication, the CU-UP 172B suspends the non-SDT DRB(s). In some implementations, if the UE 102 is not configured with a non-SDT DRB, the CU-CP 172A excludes the resume indication in the *Bearer Context Setup Request* message 612 and/or the *Bearer Context Modification Request* message 624.

In some implementations, when the CU-UP 172B suspends the non-SDT DRB(s), the CU-UP 172B suspends the bearer context(s) of the non-SDT DRB(s) and/or data communication for the non-SDT DRB(s).

Depending on the implementation, after establishing the bearer context(s) for the SDT DRB(s), the CU-UP 172B receives 616, 618 the UL data from the DU 174 and processes the UL data, because the SDT DRB(s) with which the UL data is associated are not suspended by CU-UP 172B. In some scenarios or implementations, the CU-UP 172B receives a DL data packet for the UE 102 from a CN (e.g., UPF 162) or an edge server. If the DL data packet is associated with one of the SDT DRB(s), the CU-UP 172B transmits 618 the DL data packet to the DU 174, which in turn transmits 618 the DL data packet(s) to the UE 102. If the DL data packet is associated with one of the non-SDT DRB(s), the CU-UP 172B suspends transmitting the DL data packet(s) to the DU 174. In response to receiving the DL data packet associated with the non-SDT DRB(s), the CU-UP 172B transmits, to the CU-CP 172A, a UP-to-CP message (e.g., *DL Data Notification* message) to notify the CU-CP 172A that a DL data packet for the non-SDT DRB arrives. In some implementations, the CU-UP includes, in the UP-to-CP message, a PDU session ID and/or a QoS flow ID with which the non-SDT DRB is associated.

Referring next to Fig. 6C, a scenario 600C depicts small data transmission, similar to the scenarios 500B and 600A in that the UE 102 enters a connected state (e.g., event 648) and performs a UE context retrieval process as described with regard to Fig. 6A (e.g., events 607/609). Events 602, 604, 606, 608, 610, 645, 646, 648, 650, 652, 612, 614, 619, 690, 694, 636, 692, and 695 are similar to events 502, 542, 554, 506, 508, 510, 545, 546, 548, 550, 552, 512, 514, 518, 590, 594, 536, 592, and 595, respectively. Examples and implementations for Figs. 5A, 5B, and 6A can apply to Fig. 6C. The differences between Fig. 6C and Figs. 5A, 5B, and 6A are described below.

In the scenario 600C, the CU-CP 172A refrains from including a suspend indication (e.g., *Bearer Context Status Change* IE with a *"Suspend"* value) in the *Bearer Context Setup Request* message 612 and the *Bearer Context Modification Request* message 624. Thus, the CU-UP 172B does not suspend a DRB of the UE 102 in response to or after receiving the *Bearer Context Setup Request* message 612 and the *Bearer Context Modification Request* message 624.

Depending on the implementation, after establishing the bearer context(s) for the DRB(s) of the UE 102 (e.g., the SDT DRB(s) and/or the non-SDT DRB(s) of the UE 102), the CU-UP 172B receives 616, 619 the UL data packet(s) from the DU 174 and processes the UL data packet(s), because the CU-UP 172B does not suspend the DRB(s) with which the UL data is associated. The UL data packet(s) can be PDCP PDU(s), SDAP PDU(s), IP packet(s), or Ethernet packet(s). The UL data packet(s) are associated with DRB(s) (e.g., SDT DRB(s) and/or non-SDT DRB(s)). In some implementations, the UE 102 applies one or more security functions (e.g., encryption and/or integrity protection) to the UL data packet(s) as described above. The CU-UP 172B applies one or more security functions (e.g., decryption and/or integrity protection check) to the UL data packet(s) as described above. In some scenarios or implementations, the CU-UP 172B receives DL data packet(s) for the UE 102 from a CN (e.g., UPF 162) or an edge server. The DL data packet(s) can be IP packet(s) or Ethernet packet(s) and associated with the DRB(s). In some implementations, the CU-UP 172B applies one or more security functions (e.g., encryption and/or integrity protection) to the DL data packet(s) as described above. The UE 102 applies one or more security functions (e.g., decryption and/or integrity protection check) to the DL data packet(s) as described above.

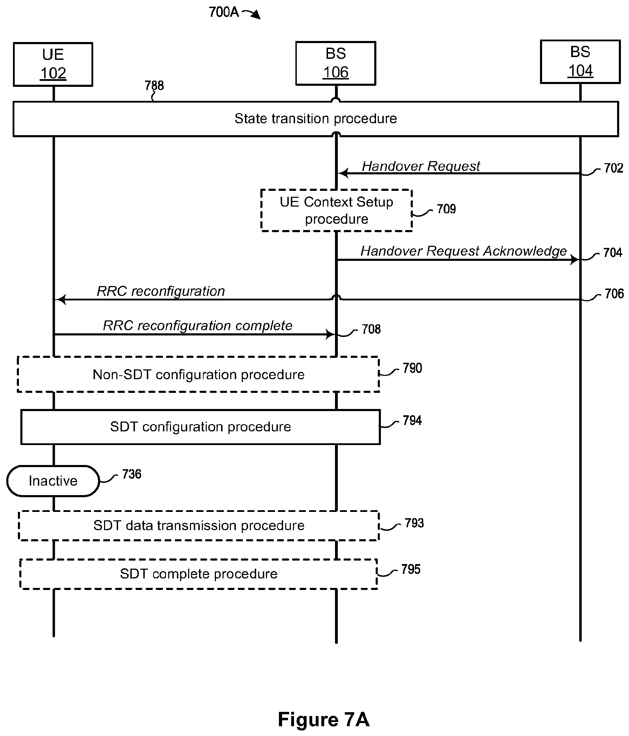

Referring now to Fig. 7A, a scenario 700A depicts a handover scenario after entering a connected state, similar to Figs. 5A and/or 5B. Initially, the UE 102 operates in the inactive state. The UE 102 and base station 104 perform 788 a state transition procedure with one another, similar to the procedures 588 or 589. The UE 102 transitions to the connected state because of the state transition procedure. Later in time, the base station 104 determines to hand over the UE 102 to a base station 106. In some implementations, the base station 104 makes the handover determination based on one or more measurement results received from the UE 102 or obtained from uplink transmissions transmitted by the UE 102. In other implementations, the base station 104 makes the handover determination because the base station 104 is congested.

In response to the handover determination, the base station 104 transmits 702 a *Handover Request* message to the base station 106 to prepare a handover for the UE 102. In some implementations, the base station 104 includes a first SDT configuration and a first non-SDT configuration for the UE 102 in the *Handover Request* message. In some implementations, the base station 104 includes the SDT configuration and non-SDT configuration in an inter-node message (i.e., a first inter-node message, e.g., *HandoverPreparationInformation* message) and includes the inter-node message in the *Handover Request* message. In some implementations, the UE 102 receives an RRC release message including the first SDT configuration from the base station 104 as described above. In some implementations, the UE 102 receives at least one RRC message (e.g., RRC resume message and/or RRC reconfiguration message) including the first non-SDT configuration from the base station 104, as described above. In some implementations, the first non-SDT configuration includes a first non-SDT DU configuration. More examples and implementations of the first SDT configuration and first non-SDT configuration are as described above.

In cases where the base station 106 is a distributed base station, the base station 106 includes a CU and a DU (not shown in Fig. 7A). In some such implementations, the CU performs 709 a UE Context Setup procedure with the DU to establish a UE context for the UE 102. More specifically, the CU transmits a *UE Context Setup Request* message to the DU to perform 709 the UE Context Setup procedure, similar to the event 608. In response, the DU transmits a *UE Context Setup Response* message to the CU, similar to the event 610. In some implementations, the CU includes the inter-node message in the *UE Context Setup Request* message. In further implementations, the DU includes a second non-SDT DU configuration in the *UE Context Setup Response* message. In still further implementations, the DU generates the second non-SDT DU configuration augmenting (e.g., replacing or modifying) the first non-SDT DU configuration. In yet further implementations, the DU refrains from including an SDT configuration in the *UE Context Setup Response* message. In some implementations, the DU ignores or discards the first SDT configuration when receiving the *UE Context Setup Request* message or the inter-node message. In other implementations, the DU retains the first SDT configuration and refrains from including an SDT configuration in the *UE Context Setup Response* message.

In some implementations, the first non-SDT DU configuration and the second non-SDT DU configuration are a first *CellGroupConfig* IE and a second *CellGroupConfig* IE, respectively. In some implementations, the DU includes, in the second non-SDT DU configuration, configuration parameters for the UE 102 to hand over to the base station 106 in response to the first inter-node message. In some implementations, the DU includes a *ReconfigurationWithSync* IE in the second *CellGroupConfig* IE. In some implementations, the base station 104 does not include a *ReconfigurationWithSync* IE in the first non-SDT DU configuration.

In some implementations, the CU refrains from including the first SDT configuration in the *UE Context Setup Request* message to prevent the DU from receiving the first SDT configuration. In some scenarios or implementations, the DU does not comprehend the first SDT configuration so that the DU ignores the *UE Context Setup Request* message or the first inter-node message or rejects the *UE Context Setup Request* message, which cause a problem. To prevent the problem, the CU in some implementations can remove the first SDT configuration from the first inter-node message and then includes the first inter-node message in the *UE Context Setup Request* message. In other implementations, the CU generates a second inter-node message (e.g., *HandoverPreparationInformation* message), which includes the first non-SDT configuration and does not include the first SDT configuration. In such implementations, the CU includes the second inter-node message in the *UE Context Setup Request* message rather than the first inter-node message.

In response to the *Handover Request* message, the base station 106 transmits 704 to the base station 104 a *Handover Request Acknowledge* message including an RRC reconfiguration message for handing over the UE 102 to the base station 106. The CU of the base station 106 includes the second non-SDT DU configuration in the RRC reconfiguration message. In some implementations, the CU includes the first inter-node message, including the first non-SDT configuration and first SDT configuration, in the *UE Context Setup Request* message. The DU includes the second non-SDT DU configuration and a second SDT DU configuration in the *UE Context Setup Response* message. In some implementations, the DU generates the second SDT DU configuration augmenting the first SDT DU configuration. In such implementations, the CU refrains from including the second SDT DU configuration in the RRC reconfiguration message. In some implementations, the CU includes a second SDT DU configuration in an RRC release message in the SDT configuration procedure 794. In other implementations, the CU ignores or discards the second SDT DU configuration.

The base station 104 then transmits 706 the RRC reconfiguration message to the UE 102. In response, the UE 102 performs a handover to the base station 104 and transmits 708 an RRC reconfiguration complete message to the base station 106. After successfully connecting to the UE 102, the base station 106 in some implementations can perform 790 a non-SDT configuration procedure with the UE 102, similar to the procedures 390, 490, 590 and 690. After successfully connecting to the UE 102 or performing 790 the non-SDT configuration procedure, the base station 106 performs 794 an SDT configuration procedure with the UE 102, similar to the procedures 394, 494, 594 and 694. In response to the SDT configuration procedure, the UE 102 transitions 736 to the inactive state, similar to the event 336, 436, 536, 636. In some implementations, after transitioning 736 to the inactive state, the UE 102 performs 792 a small data communication procedure with the base station 106, similar to the procedures 492, 592, 692. In further implementations, after performing 792 the small data communication procedure, the base station 106 performs 795 an SDT complete procedure with the UE 102, similar to the procedure 394, 494, 594, and 694.

In some implementations, if the base station 106 (e.g., the CU 172, CU-CP 172A, CU-UP 172B, or the DU 174 of the base station 106) does not support SDT, the base station 106 includes a full configuration indication in the RRC reconfiguration message in order to configure the UE 102 to release the SDT configuration. The UE 102 releases the SDT configuration in response to the full configuration indication upon receiving the RRC reconfiguration message. Otherwise, if the base station 106 supports SDT, the base station 106 refrains from including the full configuration indication in the RRC reconfiguration message. When the UE 102 receives the RRC reconfiguration message excluding the full configuration indication, the UE 102 retains the SDT configuration in response to the RRC reconfiguration message.

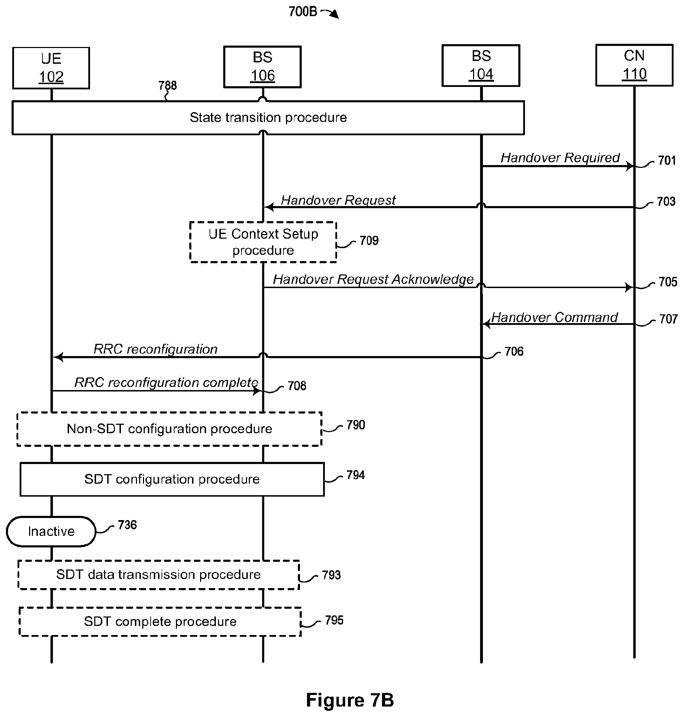

Referring next to Fig. 7B, a scenario 700B is generally similar to the scenario 700A, except that the base station 104 prepares the handover for the UE 102 with the base station 106 through the CN 110, rather than performing and/or preparing the handover with the base station 106 directly through the BS-to-BS interface. In response to the handover determination, the base station 104 transmits 701 a *Handover Required* message including an SDT configuration and a non-SDT configuration to the CN 110. In response to or after receiving 701 the *Handover Required* message, the CN 110 transmits 703 a *Handover Request* message, including the SDT configuration and non-SDT configuration, to the base station 106. In some implementations, the base station 104 includes the SDT configuration and non-SDT configuration in an inter-node message (e.g., *HandoverPreparationInformation* message) and includes the inter-node message in the *Handover Required* message. In such implementations, the CN 110 retrieves the inter-node message from the *Handover Required* message and includes the inter-node message in the *Handover Request* message.

In response to or after receiving 703 the *Handover Request* message, the base station 106 transmits 705, to the CN 110, *a Handover Request Acknowledge* message including an RRC reconfiguration message for handing over the UE 102 to the base station 106. In response to or after receiving 703 the *Handover Request Acknowledge* message, the CN 110 transmits 707 a *Handover Command* message, including the RRC reconfiguration message, to the base station 104.

Referring now to Fig. 8, a scenario 800 depicts a scenario similar to scenario 600A, but in which the UE returns to a connected state and performs an RRC connection reestablishment procedure. Initially, the UE 102 operates in the inactive state. The UE 102 and base station 104 perform 888 a state transition procedure with one another, similar to the procedure 588 or 589. The UE 102 transitions to the connected state because of the state transition procedure. While the UE 102 operates in the connected state, the UE 102 detects failure and initiates an RRC connection reestablishment procedure in response to detecting the failure. In response to the initiation, the UE 102 transmits 842 an RRC reestablishment request message to the DU 174, which in turn transmits 844 an *Initial UL RRC Message Transfer* message including the RRC reestablishment request message (e.g., an *RRCReestablishmentRequest* message or an *RRCConnectionReestabishmentRequest* message) to the CU-CP 172A. In some implementations, the RRC reestablishment request message includes a UE ID (e.g., C-RNTI) of the UE 102 and a physical cell ID. In some implementations, the RRC resume request message includes an RRC MAC-I. In some implementations, the RRC MAC-I is a *shortMAC-I* field. Depending on the implementation, the UE 102 obtains the *shortMAC-I* similarly to the *resumeMAC-I* as described with regard to obtaining the *resumeMAC-I* above.

After receiving the RRC reestablishment message, events 807, 808, 809, 810, 812, 814, 824, and/or 826 occur similarly to events 607, 608, 609, 610, 612, 614, 624, and/or 626, respectively. As such, implementations described with regard to such events similarly apply to events 807, 808, 809, 810, 812, 814, 824, and/or 826, performed after receiving the RRC reestablishment request message.

Depending on the implementation, after receiving 809 the *Retrieve UE Context Response* message, the CU-CP 172A transmits 845 a CU-to-DU message including an RRC reestablishment message (e.g., an *RRCReestablishment* message or an *RRCConnectionReestablishment* message) to the DU 174. In turn, the DU 174 transmits 846 the RRC reestablishment message to the UE 102. In response to the RRC reestablishment message, the UE 102 transmits 850 an RRC reestablishment complete message (e.g., an *RRCReestablishmentComplete* message or an *RRCConnectionReestablishmentComplete* message) to the DU 174. The DU 174 then transmits 852 a DU-to-CU message including the RRC reestablishment complete message to the CU-CP 172A. In some implementations, the CU-CP 172A can transmit 845 the CU-to-DU message before, during or after the Bearer Context Setup procedure, UE Context Setup procedure, Bearer Context Modification procedure.

Depending on the implementation, after transmitting 845 the RRC reestablishment message or receiving 852 the RRC reestablishment complete message, the CU-CP 172A performs 890 a reconfiguration procedure with the UE 102 and the DU 174 to resume SRB2 and/or the DRB(s) of the UE 102, similar to the procedure 390.

In some implementations, the CU-CP 172A refrains from including a suspend indication (e.g., *Bearer Context Status Change* IE with a *"Suspend"* value) in the *Bearer Context Setup Request* message 812. In other implementations, the CU-CP 172A includes a suspend indication (e.g., *Bearer Context Status Change* IE with a *"Suspend"* value) in the *Bearer Context Setup Request* message 812 or the *Bearer Context Modification Request* message 824. In some such implementations, the CU-CP 172A performs a Bearer Context Modification procedure with the CU-UP 172B to resume the bearer context(s) for the DRB(s), similar to the events 824 and 846.

After performing 890 the reconfiguration procedure, the CU-CP 172A can perform 891 a non-SDT configuration procedure with the UE via the DU 174, similar to the procedure 390. After performing 890 the reconfiguration procedure or 891 the non-SDT configuration procedure, the CU-CP 172A can perform 894 an SDT configuration procedure with the UE via the DU 174, similar to the procedure 394. The UE 102 transitions 836 to the inactive state from the connected state in response to or after performing 894 the SDT configuration procedure. After transitioning to the inactive state, the UE 102 can perform 892 a small data communication procedure and 895 an SDT complete procedure with the base station 106, similar to the procedures 492 and 494, respectively.

Referring next to Fig. 9, a scenario 900 depicts an RRC connection reestablishment procedure, similar to the scenario 800, but in which the CU 172 performs a UE context release procedure (e.g., events 937 and 939). Initially, the UE 102 is operative in the inactive state. The UE 102, DU 174A, and CU 172 perform 988 a state transition procedure with one another, similar to the procedures 588 or 589. In some implementations, after receiving 944 an RRC reestablishment request message, the CU-CP 172A performs a *UE Context Release Command* message to the DU 174A to release the UE context of the UE 102. In response, the DU 174A transmits 939 a *UE Context Release Complete* message to the CU-CP 172A. The *UE Context Release Command* message and *UE Context Release Complete* message can be grouped as a UE Context Release procedure. In some implementations, the CU-CP 172A performs the UE Context Release procedure with the DU 174A before, during, or after a Bearer Context Setup procedure, a UE Context Setup procedure, a Bearer Context Modification procedure, transmitting 945 an RRC reestablishment message, receiving 952 an RRC reestablishment complete message, or performing 990 a reconfiguration procedure.

Next, several example methods that can be implemented in a UE to support small data transmissions in the inactive state with a base station, DU, CU, or otherwise in a RAN, are discussed with reference to Figs. 3-9.

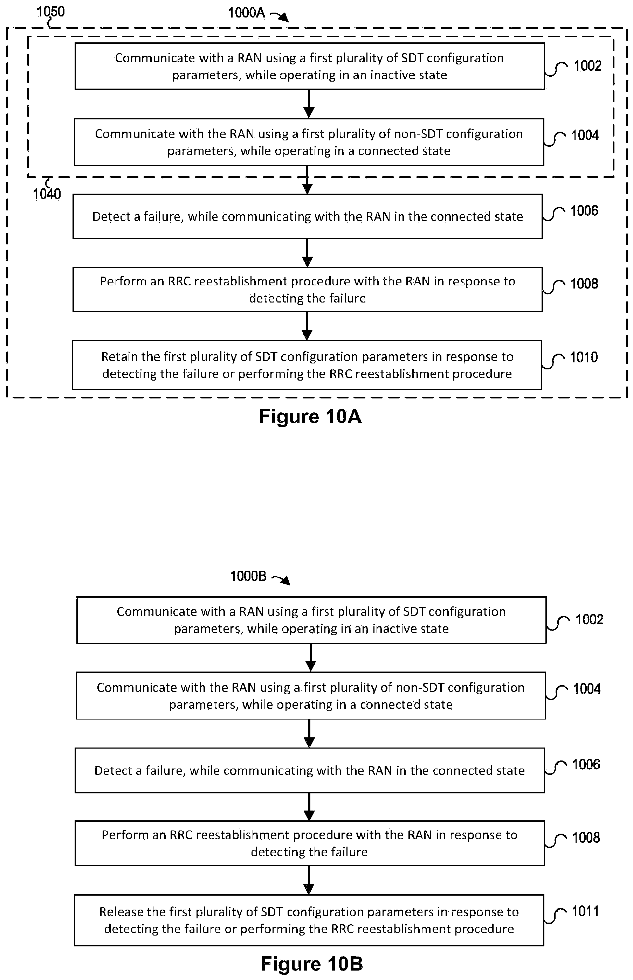

Fig. 10A illustrates a method 1000A for handling SDT configuration parameters when detecting a failure, implemented by a UE (e.g., the UE 102). The method 1000A begins at block 1002, where the UE communicates with a RAN using a first plurality of SDT configuration parameters, while operating in an inactive state (e.g., events 404/406/418/420/421/492, 592, 604/606/618/620/621/692, 793/795, 892 and 992 of Figs. 4-9). For example, the RAN can be the RAN 105 and include one or more RAN nodes such as the base station(s) 104/106, or the CU 172, CU-CP 172A and/or DU 174 of the base station(s) 104/106.

At block 1004, the UE communicates with the RAN using first plurality of non-SDT configuration parameters while operating in a connected state (e.g., events 304/310/312/314/316/318/320/321/332/334/390/394, 550/552/518/590/594, and 650/652/619/690, 706/708/790/794, 890/891/894, and 990/991/994 of Figs. 3-9). At block 1006, the UE detects a failure while communicating with the RAN in the connected state. At block 1008, the UE performs an RRC reestablishment procedure with the RAN in response to detecting the failure (e.g., events 842/844/845/846/850/852 and 942/944/945/946/950/952). At block 1010, the UE retains the first plurality of SDT configuration parameters in response to detecting the failure or performing the RRC reestablishment procedure.

Blocks 1002 and 1004 are grouped as block 1040 and blocks 1040, 1006, 1008, and 1010 are grouped as block 1050.

In some implementations, the UE releases the first plurality of non-SDT configuration parameters in response to detecting the failure or performing the RRC reestablishment procedure. In other implementations, the UE retains the first plurality of non-SDT configuration parameters in response to detecting the failure or performing the RRC reestablishment procedure. In yet other implementations, the UE retains a first portion of the first plurality of non-SDT configuration parameters and releases a second portion of the first plurality of non-SDT configuration parameters in response to detecting the failure or performing the RRC reestablishment procedure.

Fig. 10B is a flow diagram of an example method 1000B similar to the method 1000A, except that method 1000B includes block 1011 instead of block 1010. At block 1011, the UE releases the first plurality of SDT configuration parameters in response to detecting the failure or performing the RRC reestablishment procedure.

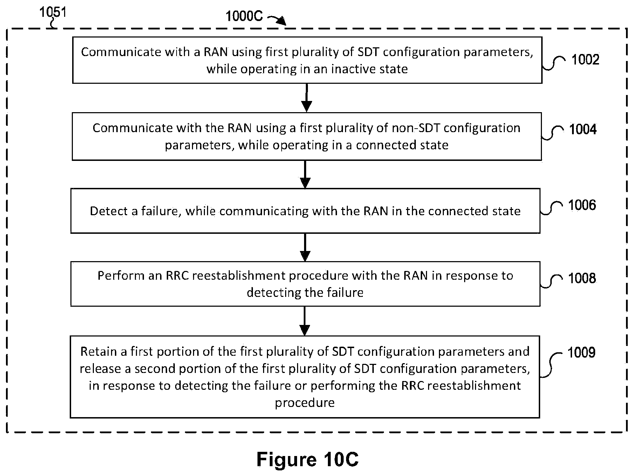

Fig. 10C is a flow diagram of an example method 1000C similar to the method 1000A, except that method 1000C includes block 1009 instead of blocks 1010. At block 1009, the UE retains a first portion of the first plurality of SDT configuration parameters and releases a second portion of the first plurality of SDT configuration parameters in response to detecting the failure or performing the RRC reestablishment procedure. By performing block 1009, the UE mahy efficiently utilize resources by retaining some portions of the SDT configuration while releasing portions of the SDT configuration that are not relevant or are associated with a detected failure. Blocks 1002, 1004, 1006, 1008, and 1009 are grouped as block 1051.

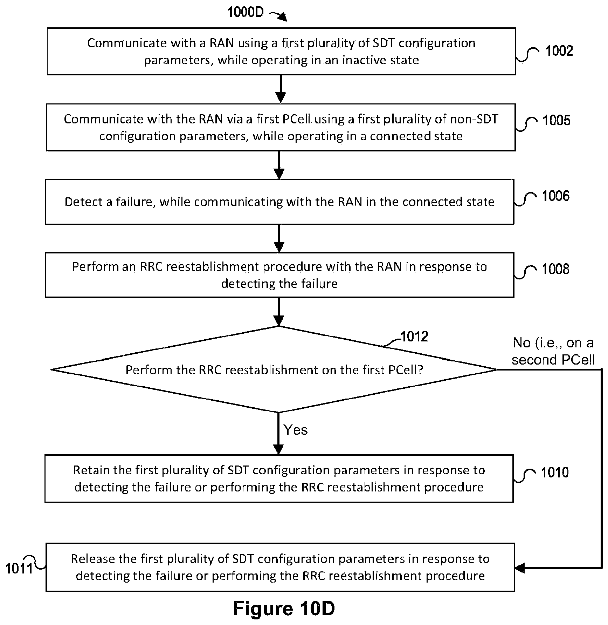

Fig. 10D is a flow diagram of an example method 1000D similar to the methods 1000A and 1000B, except that the method 1000D includes blocks 1012 and 1005, instead of block 1004. As detailed below, by performing the check at block 1012, the UE efficiently determines whether to retain or release SDT configuration parameters based on the associated PCell and, as such, based on the relevance of the previous SDT configuration parameters. The method 1000D begins at block 1002 and then proceeds to blocks 1005, 1006, 1008, and 1012. At block 1005, the UE communicates with the RAN via a first primary cell (PCell) using a first plurality of non-SDT configuration parameters, while operating in a connected state (e.g., events 304/310/312/314/316/318/320/321/332/334/390/394, 550/552/518/590/594, and 650/652/619/690, 706/708/790/794, 890/891/894, and 990/991/994 of Figs. 3-9). At block 1012, the UE determines whether the UE performs the RRC reestablishment on the first PCell. If the UE determines that the UE performs the RRC reestablishment on the first PCell, the flow proceeds to block 1010. At block 1010, the UE retains the first plurality of SDT configuration parameters in response to detecting the failure or performing the RRC reestablishment procedure. Otherwise, if the UE determines that the UE performs the RRC reestablishment on a second PCell, the flow proceeds to block 1011. At block 1011, the UE releases the first plurality of SDT configuration parameters in response to detecting the failure or performing the RRC reestablishment procedure.

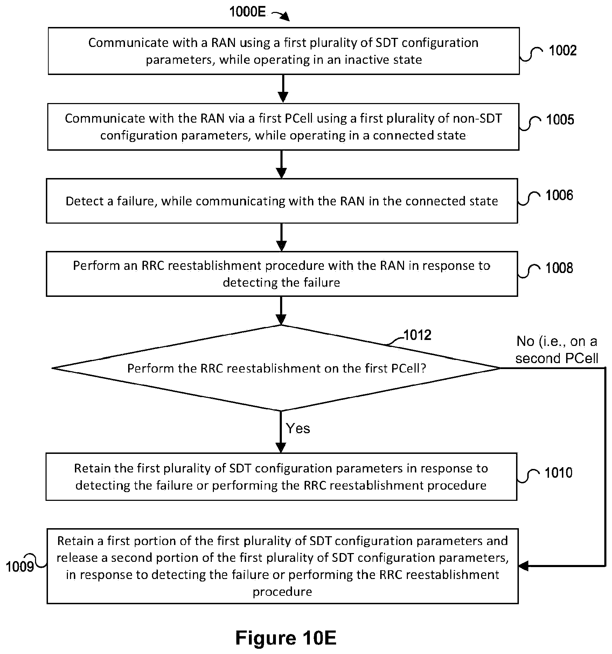

Fig. 10E is a flow diagram of an example method 1000E similar to the method 1000D, except that the method 1000E includes block 1009 instead of block 1011. In particular, if the UE determines that the UE performs the RRC reestablishment on a second PCell, the flow proceeds to block 1009.

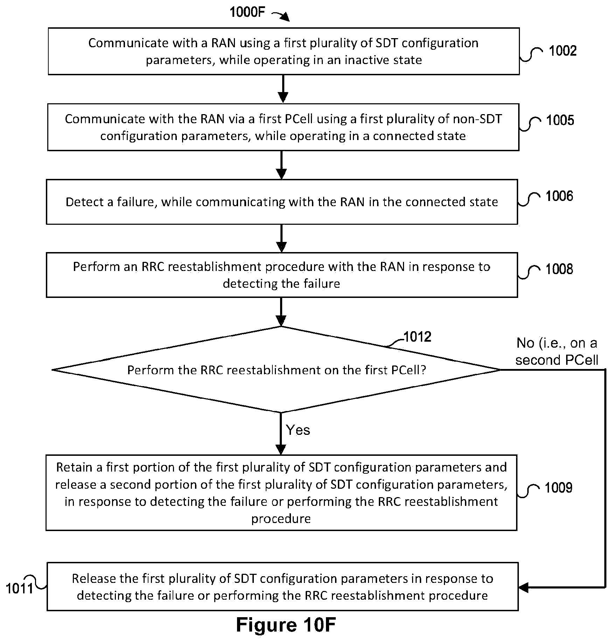

Fig. 10F is a flow diagram of an example method 1000F similar to the method 1000D, except that the method 1000F includes block 1009 instead of block 1010. In particular, if the UE determines that the UE performs the RRC reestablishment on the first PCell, the flow proceeds to block 1009.

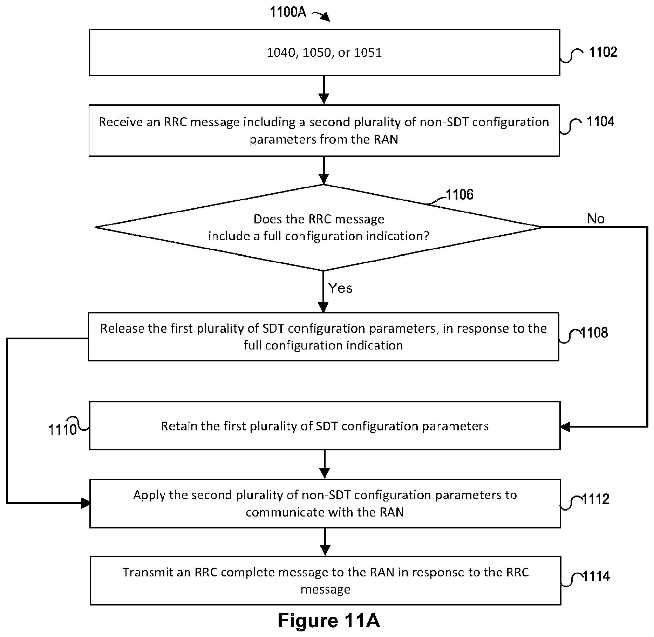

Fig. 11A illustrates a method 1100A for handling SDT configuration parameters when detecting a failure, implemented by a UE (e.g., the UE 102) interacting with a RAN (e.g., RAN 105). For example, the RAN can include or be one or more RAN nodes such as the base station(s) 104/106, or the CU 172, CU-CP 172A and/or DU 174 of the base station(s) 104/106.

The method 1100A begins at block 1102, where the UE performs at least one of block 1040, 1050, or 1051 as described above. At block 1104, the UE receives an RRC message including a second plurality of non-SDT configuration parameters from the RAN (e.g., events 304/310/312/390, 545/546/590, 645/646/690, 706/790, 845/846/890/891, and 945/946/990/991 of Figs. 3-9). At block 1106, the UE determines whether the RRC message includes a full configuration indication. If the UE determines that the RRC message includes a full configuration indication, the flow proceeds to block 1108. At block 1108, the UE releases the first plurality of SDT configuration parameters in response to the full configuration indication. Otherwise, if the UE determines that the RRC message does not include a full configuration indication, the flow proceeds to block 1110. At block 1110, the UE retains the first plurality of SDT configuration parameters. At block 1112, the UE applies the second plurality of non-SDT configuration parameters to communicate with the RAN. The flow proceeds to block 1112 from block 1108 as well as from block 1110. At block 1114, the UE transmits an RRC complete message to the RAN in response to the RRC message (e.g., events 314/316/390, 590, 650/652/690, 708/790, 850/852/890/891, and 950/952/990/991 of Figs. 3-9).

In some implementations, the RRC message and RRC complete message are an RRC reconfiguration message and an RRC reconfiguration complete message, respectively. In further implementations, the UE retains or releases the first plurality of non-SDT configuration parameters in response to the full configuration indication (e.g., a *fullConfig* field).

In some cases where the RRC message does not include the full configuration indication, the UE augments at least a portion of the first plurality of non-SDT configuration parameters with the second plurality of non-SDT configuration parameters. In some such cases, the UE communicates with the RAN using the second plurality of non-SDT configuration parameters and a remaining portion of the first plurality of non-SDT configuration parameters.

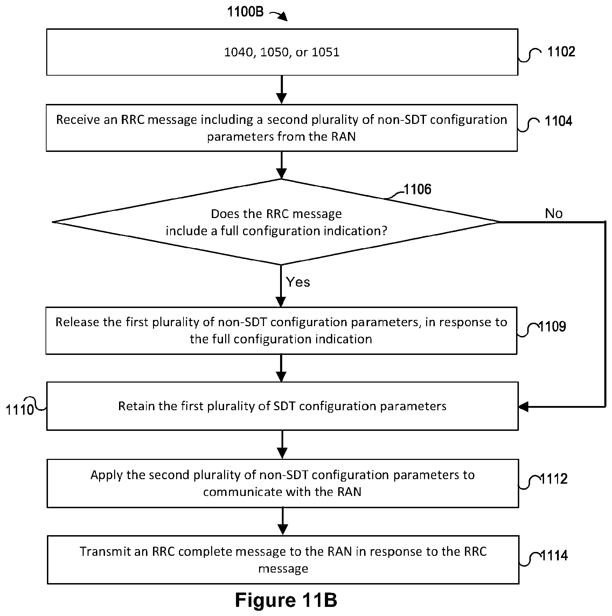

Fig. 11B is a flow diagram of an example method 1100B similar to the method 1100A, except that the method 1100B includes block 1109 instead of block 1108. At block 1109, the UE releases the first plurality of non-SDT configuration parameters in response to the full configuration indication.

The following description may apply to the description above.

Generally speaking, description for one of the above figures can apply to another of the above figures. An event or block described above can be optional or omitted. For example, an event or block with dashed lines in the figures can be optional. In some implementations, "message" is used and can be replaced by "information element (IE)", and vice versa. In some implementations, "IE" is used and can be replaced by "field", and vice versa. In some implementations, "configuration" can be replaced by "configurations" or "configuration parameters", and vice versa. In some implementations, "small data transmission" can be replaced by "early data transmission (EDT)" and "SDT" can be replaced by "EDT", and vice versa. In some implementations, "small data transmission" can be replaced by "small data communication", and vice versa. In some implementations, "stop" can be replaced by "suspend".

In some implementations, the "second UE CG-SDT timer" can be replaced by "CG-SDT retransmission timer (cg-SDT-RetransmissionTimer)". In some implementations, "CG-SDT", "CG", "SDT-CG" can be interchanged.

A user device in which the techniques of this disclosure can be implemented (e.g., the UE 102) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of-things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules *(e.g.,* code, or machine-readable instructions stored on non-transitory machine-readable medium) or hardware modules. A hardware module is a tangible unit capable of performing certain operations and may be configured or arranged in a certain manner. A hardware module can comprise dedicated circuitry or logic that is permanently configured (*e.g.,* as a special-purpose processor, such as a field programmable gate array (FPGA) or an application-specific integrated circuit (ASIC), a digital signal processor (DSP), etc.) to perform certain operations. A hardware module may also comprise programmable logic or circuitry (*e.g.,* as encompassed within a general-purpose processor or other programmable processor) that is temporarily configured by software to perform certain operations. The decision to implement a hardware module in dedicated and permanently configured circuitry, or in temporarily configured circuitry (*e.g*., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

## Claims

1. A method, implemented in a user equipment (102), UE, communicating with a radio access network (105), RAN, node, for monitoring a downlink control channel during a random access small data transmission, RA-SDT, session, the method comprising:
receiving, at the UE (102) and from the RAN (105) node, a random access procedure message (404) including a temporary identifier for the UE (102);
monitoring, at the UE (102) and during the RA-SDT session, the downlink control channel using the temporary identifier;
receiving, at the UE (102) and from the RAN (105) node, an indication (434) to end the RA-SDT session;
responsive to the receiving of the indication (434), stopping, at the UE (102), the monitoring of the downlink control channel using the temporary identifier; and
responsive to the receiving of the indication (434), retaining the temporary identifier.

2. The method of claim 1, the method further comprising:
receiving, at the UE (102) and from the RAN (105) node, downlink control information, DCI, using the temporary identifier;
wherein the monitoring of the downlink control channel includes:
monitoring the downlink control channel according to the DCI.

3. The method of any one of the preceding claims, wherein the temporary identifier is a cell radio network temporary identifier, C-RNTI.

4. The method of any one of the preceding claims, wherein the temporary identifier is a first temporary identifier, and the method further comprises:
monitoring, after the stopping, the downlink control channel using a second temporary identifier.

5. The method of claim 4, wherein the second temporary identifier is a paging radio network temporary identifier, P-RNTI.

6. A method, implemented in a user equipment, UE, (102) communicating with a radio access network, RAN, (105) node, for monitoring a downlink control channel during a configured grant small data transmission, CG-SDT, session, the method comprising:
receiving, at the UE (102) and from the RAN (105) node, a first indication to configure a CG-SDT session and causing the UE (102) to store a temporary identifier for the UE (102);
monitoring, at the UE (102) and during the CG-SDT session, the downlink control channel using the temporary identifier;
receiving, at the UE (102) and from the RAN (105) node, a second indication to end the CG-SDT session;
responsive to the receiving of the second indication, stopping, at the UE (102), the monitoring of the downlink control channel; and
responsive to the receiving of the second indication, retaining the temporary identifier.

7. The method of claim 6, the method further comprising:
receiving, at the UE (102) and from the RAN (105) node, downlink control information, DCI, using the temporary identifier;
wherein the monitoring of the downlink control channel includes:
monitoring the downlink control channel according to the DCI.

8. The method of any one of claims 6-7, wherein the temporary identifier is a cell radio network temporary identifier, C-RNTI.

9. The method of any one of claims 6-8, wherein the temporary identifier is a first temporary identifier, and the method further comprises:
monitoring, after the stopping, the downlink control channel using a second temporary identifier.

10. The method of claim 9, wherein the second temporary identifier is a paging radio network temporary identifier, P-RNTI.

11. A user equipment, comprising a transceiver and processing hardware, configured to implement a method according to any one of the preceding claims.

## Patentansprüche

1. Verfahren, das in einer Benutzerausrüstung (102), UE (user equipment), implementiert ist, die mit einem Funkzugangsnetzwerk (105), RAN (radio access network), Knoten kommuniziert, zum Überwachen eines Downlink-Steuerkanals während einer Sitzung für eine kleine Datenübertragung mit Zufallszugriff, RA-SDT (random access small data transmission), wobei das Verfahren Folgendes umfasst:
Empfangen einer Zufallszugriffsverfahrensnachricht (404) am UE (102) und vom RAN (105) Knoten, die eine temporäre Kennung für das UE (102) beinhaltet;
Überwachen des Downlink-Steuerkanals am UE (102) und während der RA-SDT-Sitzung unter Verwendung der temporären Kennung;
Empfangen einer Angabe (434) zum Beenden der RA-SDT-Sitzung am UE (102) und vom RAN (105) Knoten;
als Reaktion auf das Empfangen der Angabe (434) Stoppen des Überwachens des Downlink-Steuerkanals am UE (102) unter Verwendung der temporären Kennung; und
als Reaktion auf das Empfangen der Angabe (434) Abspeichern der temporären Kennung.

2. Verfahren nach Anspruch 1, wobei das Verfahren ferner Folgendes umfasst:
Empfangen von Downlink-Steuerinformationen, DCI (downlink control information), am UE (102) und vom RAN (105) Knoten unter Verwendung der temporären Kennung;
wobei das Überwachen des Downlink-Steuerkanals Folgendes beinhaltet:
Überwachen des Downlink-Steuerkanals gemäß den DCI.

3. Verfahren nach einem der vorhergehenden Ansprüche, wobei es sich bei der temporären Kennung um eine temporäre Kennung eines Mobilfunknetzwerkes, C-RNTI (cell radio network temporary identifier), handelt.

4. Verfahren nach einem der vorhergehenden Ansprüche, wobei es sich bei der temporären Kennung um eine erste temporäre Kennung handelt und das Verfahren ferner Folgendes umfasst:
Überwachen des Downlink-Steuerkanals nach dem Stoppen unter Verwendung einer zweiten temporären Kennung.

5. Verfahren nach Anspruch 4, wobei es sich bei der zweiten temporären Kennung um eine temporäre Kennung eines Paging-Funknetzwerkes, P-RNTI, handelt.

6. Verfahren, das in einer Benutzerausrüstung, UE, (102) implementiert ist, die mit einem Funkzugangsnetzwerk, RAN, (105) Knoten kommuniziert, zum Überwachen eines Downlink-Steuerkanals während einer Sitzung für eine kleine Datenübertragung mit konfigurierter Erlaubnis, CG-SDT, wobei das Verfahren Folgendes umfasst:
Empfangen einer ersten Angabe am UE (102) und vom RAN (105) Knoten, um eine CG-SDT-Sitzung zu konfigurieren, und Veranlassen des UE (102), eine temporäre Kennung für das UE (102) zu speichern;
Überwachen des Downlink-Steuerkanals am UE (102) und während der CG-SDT-Sitzung unter Verwendung der temporären Kennung;
Empfangen einer zweiten Angabe zum Beenden der CG-SDT-Sitzung am UE (102) und vom RAN (105) Knoten;
als Reaktion auf das Empfangen der zweiten Angabe Stoppen des Überwachens des Downlink-Steuerkanals am UE (102); und
als Reaktion auf das Empfangen der zweiten Angabe Abspeichern der temporären Kennung.

7. Verfahren nach Anspruch 6, wobei das Verfahren ferner Folgendes umfasst:
Empfangen von Downlink-Steuerinformationen, DCI, am UE (102) und vom RAN (105) Knoten unter Verwendung der temporären Kennung;
wobei das Überwachen des Downlink-Steuerkanals Folgendes beinhaltet:
Überwachen des Downlink-Steuerkanals gemäß den DCI.

8. Verfahren nach einem der Ansprüche 6-7, wobei es sich bei der temporären Kennung um eine temporäre Kennung eines Mobilfunknetzwerkes, C-RNTI, handelt.

9. Verfahren nach einem der Ansprüche 6-8, wobei es sich bei der temporären Kennung um eine erste temporäre Kennung handelt und das Verfahren ferner Folgendes umfasst:
Überwachen des Downlink-Steuerkanals nach dem Stoppen unter Verwendung einer zweiten temporären Kennung.

10. Verfahren nach Anspruch 9, wobei es sich bei der zweiten temporären Kennung um eine temporäre Kennung eines Paging-Funknetzwerkes, P-RNTI (paging radio network temporary identifier), handelt.

11. Benutzerausrüstung, umfassend einen Sendeempfänger und Verarbeitungshardware, die dazu konfiguriert ist, ein Verfahren nach einem der vorhergehenden Ansprüche zu implementieren.

## Revendications

1. Procédé, mis en œuvre dans un équipement utilisateur (102), UE, communiquant avec un nœud de réseau d'accès radio (105), RAN, pour la surveillance d'un canal de commande de liaison descendante pendant une session de transmission de petites données à accès aléatoire, RA-SDT, le procédé comprenant :
la réception, au niveau de l'UE (102) et en provenance du nœud RAN (105), d'un message de procédure d'accès aléatoire (404) comportant un identifiant temporaire pour l'UE (102) ;
la surveillance, au niveau de l'UE (102) et pendant la session RA-SDT, du canal de commande de liaison descendante à l'aide de l'identifiant temporaire ;
la réception, au niveau de l'UE (102) et en provenance du nœud RAN (105), d'une indication (434) pour mettre fin à la session RA-SDT ;
en réponse à la réception de l'indication (434), l'arrêt, au niveau de l'UE (102), de la surveillance du canal de commande de liaison descendante à l'aide de l'identifiant temporaire ; et
en réponse à la réception de l'indication (434), la conservation de l'identifiant temporaire.

2. Procédé selon la revendication 1, le procédé comprenant également :
la réception, au niveau de l'UE (102) et en provenance du nœud RAN (105), d'informations de commande de liaison descendante, DCI, à l'aide de l'identifiant temporaire ;
dans lequel la surveillance du canal de commande de liaison descendante comporte :
la surveillance du canal de commande de liaison descendante selon les DCI.

3. Procédé selon l'une quelconque des revendications précédentes, dans lequel l'identifiant temporaire est un identifiant temporaire de réseau radio cellulaire, C-RNTI.

4. Procédé selon l'une quelconque des revendications précédentes, dans lequel l'identifiant temporaire est un premier identifiant temporaire, et le procédé comprend également :
la surveillance, après l'arrêt, du canal de commande de liaison descendante à l'aide d'un second identifiant temporaire.

5. Procédé selon la revendication 4, dans lequel le second identifiant temporaire est un identifiant temporaire de réseau radio de radiomessagerie, P-RNTI.

6. Procédé, mis en œuvre dans un équipement utilisateur, UE, (102) communiquant avec un nœud de réseau d'accès radio (105), RAN, pour la surveillance d'un canal de commande de liaison descendante pendant une session de transmission de petites données à autorisation configurée, CG-SDT, le procédé comprenant :
la réception, au niveau de l'UE (102) et en provenance du nœud RAN (105), d'une première indication pour configurer une session CG-SDT et amener l'UE (102) à stocker un identifiant temporaire pour l'UE (102) ;
la surveillance, au niveau de l'UE (102) et pendant la session CG-SDT, du canal de commande de liaison descendante à l'aide de l'identifiant temporaire ;
la réception, au niveau de l'UE (102) et en provenance du nœud RAN (105), d'une seconde indication pour mettre fin à la session CG-SDT ;
en réponse à la réception de la seconde indication, l'arrêt, au niveau de l'UE (102), de la surveillance du canal de commande de liaison descendante ; et
en réponse à la réception de la seconde indication, la conservation de l'identifiant temporaire.

7. Procédé selon la revendication 6, le procédé comprenant également :
la réception, au niveau de l'UE (102) et en provenance du nœud RAN (105), d'informations de commande de liaison descendante, DCI, à l'aide de l'identifiant temporaire ;
dans lequel la surveillance du canal de commande de liaison descendante comporte :
la surveillance du canal de commande de liaison descendante selon les DCI.

8. Procédé selon l'une quelconque des revendications 6 et 7, dans lequel l'identifiant temporaire est un identifiant temporaire de réseau radio cellulaire, C-RNTI.

9. Procédé selon l'une quelconque des revendications 6 à 8, dans lequel l'identifiant temporaire est un premier identifiant temporaire, et le procédé comprend également :
la surveillance, après l'arrêt, du canal de commande de liaison descendante à l'aide d'un second identifiant temporaire.

10. Procédé selon la revendication 9, dans lequel le second identifiant temporaire est un identifiant temporaire de réseau radio de radiomessagerie, P-RNTI.

11. Équipement utilisateur comprenant un émetteur-récepteur et un matériel de traitement, configuré pour mettre en œuvre un procédé selon l'une quelconque des revendications précédentes.
